(19) Europäisches Patentamt
European Patent Office
Office européen des brevets

(11) EP 4 496 308 A1

(12) EUROPEAN PATENT APPLICATION
published in accordance with Art. 153(4) EPC

(43) Date of publication:
22.01.2025 Bulletin 2025/04

(51) International Patent Classification (IPC):
H04N 19/11 (2014.01)          H04N 19/593 (2014.01)
H04N 19/176 (2014.01)         H04N 19/132 (2014.01)
H04N 19/105 (2014.01)

(21) Application number: 23771077.7

(22) Date of filing: 15.03.2023

(52) Cooperative Patent Classification (CPC):
H04N 19/105; H04N 19/11; H04N 19/132;
H04N 19/176; H04N 19/593

(86) International application number:
PCT/KR2023/003439

(87) International publication number:
WO 2023/177198 (21.09.2023 Gazette 2023/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.03.2022 KR 20220032240
14.03.2023 KR 20230033226

(71) Applicant: KT Corporation
Seongnam-si, Gyeonggi-do 13606 (KR)

(72) Inventor: LIM, Sung Won
Seongnam-si, Gyeonggi-do 13606 (KR)

(74) Representative: Schmitt-Nilson Schraud Waibel
Wohlfrom
Patentanwälte Partnerschaft mbB
Pelkovenstraße 143
80992 München (DE)

(54) IMAGE ENCODING/DECODING METHOD AND APPARATUS

(57) An image encoding/decoding method according to the present invention comprises: determining at least one intra prediction mode for a current block; and on the basis of the at least one intra prediction mode, performing intra prediction on the current block. Here, the at least one intra prediction mode may be determined on the basis of a cost derived by performing intra prediction on a reference region of the current block on the basis of each of a plurality of intra prediction modes.

【FIG. 3】

EP 4 496 308 A1

**Description**

[Technical Field]

The present disclosure relates to a method and a device for processing an image signal.

[Background Art]

Recently, demands for high-resolution and high-quality images such as HD(High Definition) images and UHD(Ultra High Definition) images have increased in a variety of application fields. As image data becomes high-resolution and high-quality, the volume of data relatively increases compared to the existing image data, so when image data is transmitted by using media such as the existing wire and wireless broadband circuit or is stored by using the existing storage medium, expenses for transmission and expenses for storage increase. High efficiency image compression technologies may be utilized to resolve these problems which are generated as image data becomes high-resolution and high-quality.

There are various technologies such as an inter prediction technology which predicts a pixel value included in a current picture from a previous or subsequent picture of a current picture with an image impression technology, an intra prediction technology which predicts a pixel value included in a current picture by using pixel information in a current picture, an entropy encoding technology which assigns a short sign to a value with high appearance frequency and assigns a long sign to a value with low appearance frequency and so on, and image data may be effectively compressed and transmitted or stored by using these image compression technologies.

On the other hand, as demands for a high-resolution image have increased, demands for stereo-scopic image contents have increased as a new image service. A video compression technology for effectively providing high-resolution and ultra high-resolution stereo-scopic image contents has been discussed.

[Disclosure]

[Technical Problem]

The purpose of the present disclosure is to provide an intra prediction method and device in encoding/decoding an image signal.

The purpose of the present disclosure is to provide a method and a device for determining an intra prediction mode for intra prediction on a decoder side in encoding/decoding an image signal.

The purpose of the present disclosure is to provide a method and a device for obtaining a prediction block by using a plurality of intra prediction modes in encoding/decoding an image signal.

Technical effects of the present disclosure may be non-limited by the above-mentioned technical effects, and other unmentioned technical effects may be clearly understood from the following description by those having ordinary skill in the technical field to which the present disclosure pertains.

[Technical Solution]

An image decoding method according to the present disclosure may include determining at least one intra prediction mode for a current block; and based on the at least one intra prediction mode, performing intra prediction on the current block. In this case, the at least one intra prediction mode may be determined based on a cost derived by performing intra prediction on a reference region of the current block based on each of a plurality of intra prediction modes.

An image encoding method according to the present disclosure may include determining at least one intra prediction mode for a current block; and based on the at least one intra prediction mode, performing intra prediction on the current block. In this case, the at least one intra prediction mode may be determined based on a cost derived by performing intra prediction on a reference region of the current block based on each of a plurality of intra prediction modes.

In an image decoding/encoding method according to the present disclosure, a cost of an intra prediction mode may be calculated based on a difference between reconstructed samples of the reference region and prediction samples of the reference region obtained through the intra prediction mode.

In an image decoding/encoding method according to the present disclosure, the reference region may include a top reference region at a top position of the current block and a left reference region at a left position of the current block.

In an image decoding/encoding method according to the present disclosure, a cost of the plurality of intra prediction modes is obtained independently for each of the top reference region and the left reference region, and at least one of a first intra prediction mode having the lowest cost for the top reference region and a second intra prediction mode having the lowest cost for the left reference region may be determined as the at least one intra prediction mode of the current block.

In an image decoding/encoding method according to the present disclosure, the at least one intra prediction mode may be determined in ascending order of costs of the plurality of intra prediction modes.

In an image decoding/encoding method according to the present disclosure, when a plurality of intra prediction modes are selected for the current block, intra prediction may be performed on the current block based on each of the plurality of intra prediction modes to obtain a plurality of prediction blocks, and through an average operation or a weighted sum operation of the plurality of prediction blocks, a final prediction block of the current block may be obtained.

In an image decoding/encoding method according to the present disclosure, the plurality of intra prediction modes may include candidate modes derived based on the current block.

In an image decoding/encoding method according to the present disclosure, the at least one intra prediction mode of the current block is selected from a plurality of candidate modes included in a candidate list, and at least one of the candidate modes may be selected in ascending order of costs of the plurality of intra prediction modes.

A computer-readable recording medium that stores a bitstream encoded by an image encoding method according to the present disclosure may be provided.

[Technical Effects]

According to the present disclosure, encoding efficiency of an intra prediction mode of a current block may be improved by deriving an intra prediction mode from a decoder side.

According to the present disclosure, accuracy of intra prediction may be improved by using a plurality of intra prediction modes.

Effects obtainable from the present disclosure are not limited to the above-mentioned effects and other unmentioned effects may be clearly understood from the following description by those having ordinary skill in the technical field to which the present disclosure pertains.

[Brief Description of Drawings]

FIG. 1 is a block diagram showing an image encoding device according to an embodiment of the present disclosure.

FIG. 2 is a block diagram showing an image decoding device according to an embodiment of the present disclosure.

FIG. 3 shows an image encoding/decoding method performed by an image encoding/decoding device according to the present disclosure.

FIGS. 4 and 5 show an example of a plurality of intra prediction modes according to the present disclosure.

FIG. 6 shows an intra prediction method based on a planar mode according to the present disclosure.

FIG. 7 shows an intra prediction method based on a DC mode according to the present disclosure.

FIG. 8 shows an intra prediction method based on a directional mode according to the present disclosure.

FIG. 9 shows a method for deriving a sample at a fractional position.

FIGS. 10 and 11 show that a tangent value for an angle is scaled 32 times per intra prediction mode.

FIG. 12 is a diagram illustrating an intra prediction aspect when a directional mode is one of mode no. 34 to mode no. 49.

FIG. 13 is a diagram for describing an example of generating a top reference sample by interpolating left reference samples.

FIG. 14 shows an example in which intra prediction is performed by using reference samples arranged in a 1D array.

FIG. 15 is a diagram illustrating a configuration of a reference region of a current block and reference samples for performing intra prediction on the reference area.

FIGS. 16 to 21 are a diagram illustrating how intra prediction is performed on a top reference region and a left reference region.

FIG. 22 shows an example related to a configuration of a reference region.

FIG. 23 shows a luma block corresponding to a chroma block per partition structure.

FIG. 24 is a diagram for describing an example of calculating a cost for an intra prediction mode of each luma block.

[Mode for Invention]

As the present disclosure may make various changes and have several embodiments, specific embodiments will be illustrated in a drawing and described in detail. But, it is not intended to limit the present disclosure to a specific embodiment, and it should be understood that it includes all changes, equivalents or substitutes included in an idea and a technical scope for the present disclosure. A similar reference numeral was used for a similar component while describing each drawing.

A term such as first, second, etc. may be used to describe various components, but the components should not be limited by the terms. The terms are used only to distinguish one component from other components. For example, without going beyond a scope of a right of the present disclosure, a first component may be referred to as a second component and similarly, a second component may be also referred to as a first component. A term of and/or includes a combination of a plurality of relative entered items or any item of a plurality of relative entered items.

When a component is referred to as being "linked" or "connected" to other component, it should be understood that it may be directly linked or connected to that other component, but other component may exist in the middle. On the other hand, when a component is referred to as being "directly linked" or "directly connected" to other component, it should be understood that other component does not exist in the middle.

As terms used in this application are just used to describe a specific embodiment, they are not intended to limit the present disclosure. Expression of the singular includes expression of the plural unless it clearly has a different meaning contextually. In this application, it should be understood that a term such as "include" or "have", etc. is to designate the existence of characteristics, numbers, steps, motions, components, parts or their combinations entered in the specification, but is not to exclude a possibility of addition or existence of one or more other characteristics, numbers, steps, motions, components, parts or their combinations in advance.

Hereinafter, referring to the attached drawings, a desirable embodiment of the present disclosure will be described in more detail. Hereinafter, the same reference numeral is used for the same component in a drawing and an overlapping description for the same component is omitted.

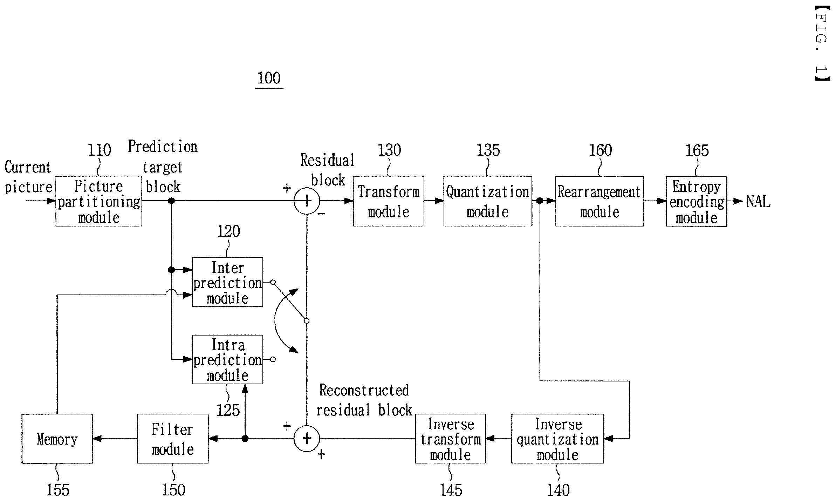

FIG. 1 is a block diagram showing an image encoding device according to an embodiment of the present disclosure.

Referring to FIG. 1, an image encoding device 100 may include a picture partitioning unit 110, prediction units 120 and 125, a transform unit 130, a quantization unit 135, a rearrangement unit 160, an entropy encoding unit 165, a dequantization unit 140, an inverse-transform unit 145, a filter unit 150, and a memory 155.

As each construction unit shown in FIG. 1 is independently shown to represent different characteristic functions in an image encoding device, it does not mean that each construction unit is constituted by separated hardware or one software unit. That is, as each construction unit is included by being enumerated as each construction unit for convenience of a description, at least two construction units of each construction unit may be combined to constitute one construction unit or one construction unit may be partitioned into a plurality of construction units to perform a function, and even an integrated embodiment and a separated embodiment of each construction unit are also included in a scope of a right of the present disclosure unless they are departing from the essence of the present disclosure.

Further, some components may be just an optional component for improving performance, not a necessary component which perform an essential function in the present disclosure. The present disclosure may be implemented by including only a construction unit necessary for implementing the essence of the present disclosure excluding a component used to just improve performance, and a structure including only a necessary component excluding an optional component used to just improve performance is also included in a scope of a right of the present disclosure.

A picture partitioning unit 110 may partition an input picture into at least one processing unit. In this case, a processing unit may be a prediction unit (PU), a transform unit (TU) or a coding unit (CU). In a picture partitioning unit 110, one picture may be partitioned into a combination of a plurality of coding units, prediction units and transform units and a picture may be encoded by selecting a combination of one coding unit, prediction unit and transform unit according to a predetermined standard (e.g., a cost function).

For example, one picture may be partitioned into a plurality of coding units. In order to partition a coding unit in a picture, a recursive tree structure such as a quad tree may be used, and a coding unit which is partitioned into other coding units by using one image or the largest coding unit as a route may be partitioned with as many child nodes as the number of partitioned coding units. A coding unit which is no longer partitioned according to a certain restriction becomes a leaf node. In other words, when it is assumed that only square partitioning is possible for one coding unit, one coding unit may be partitioned into up to four other coding units.

Hereinafter, in an embodiment of the present disclosure, a coding unit may be used as a unit for encoding or may be used as a unit for decoding.

A prediction unit may be partitioned with at least one square or rectangular shape, etc. in the same size in one coding unit or may be partitioned so that any one prediction unit of prediction units partitioned in one coding unit can have a shape and/or a size different from another prediction unit.

When a prediction unit for which intra prediction is performed based on a coding unit is generated and it is not the minimum coding unit, intra prediction may be performed without being partitioned into a plurality of prediction units NxN.

Prediction units 120 and 125 may include an inter prediction unit 120 performing inter prediction and an intra prediction unit 125 performing intra prediction. Whether to perform inter prediction or intra prediction for a coding unit may be determined and detailed information according to each prediction method (e.g., an intra prediction mode, a motion vector, a reference picture, etc.) may be determined. In this case, a processing unit that prediction is performed may be different from a processing unit that a prediction method and details are determined. For example, a prediction method, a prediction mode, etc. may be determined in a prediction unit and prediction may be performed in a transform unit. A residual value (a residual block) between a generated prediction block and an original block may be input to a transform unit 130. In addition, prediction mode information, motion vector information, etc. used for prediction may be encoded with a residual value in an entropy encoding unit 165 and may be transmitted to a decoding device. When a specific encoding mode is used, an original block may be encoded as it is and transmitted to a decoding unit without generating a prediction block through prediction units 120 or 125.

An inter prediction unit 120 may predict a prediction unit based on information on at least one picture of a previous picture or a subsequent picture of a current picture, or in some cases, may predict a prediction unit based on information on some encoded regions in a current picture. An inter prediction unit 120 may include a reference picture interpolation unit, a motion prediction unit and a motion compensation unit.

A reference picture interpolation unit may receive reference picture information from a memory 155 and generate pixel information equal to or less than an integer pixel in a reference picture. For a luma pixel, a 8-tap DCT-based interpolation filter having a different filter coefficient may be used to generate pixel information equal to or less than an integer pixel in a 1/4 pixel unit. For a chroma signal, a 4-tap DCT-based interpolation filter having a different filter coefficient may be used to generate pixel information equal to or less than an integer pixel in a 1/8 pixel unit.

A motion prediction unit may perform motion prediction based on a reference picture interpolated by a reference picture interpolation unit. As a method for calculating a motion vector, various methods such as FBMA (Full search-based Block Matching Algorithm), TSS (Three Step Search), NTS (New Three-Step Search Algorithm), etc. may be used. A motion vector may have a motion vector value in a 1/2 or 1/4 pixel unit based on an interpolated pixel. A motion prediction unit may predict a current prediction unit by varying a motion prediction method. As a motion prediction method, various methods such as a skip method, a merge method, an advanced motion vector prediction (AMVP) method, an intra block copy method, etc. may be used.

An intra prediction unit 125 may generate a prediction unit based on reference pixel information around a current block which is pixel information in a current picture. When a neighboring block in a current prediction unit is a block which performed inter prediction and accordingly, a reference pixel is a pixel which performed inter prediction, a reference pixel included in a block which performed inter prediction may be used by being replaced with reference pixel information of a surrounding block which performed intra prediction. In other words, when a reference pixel is unavailable, unavailable reference pixel information may be used by being replaced with at least one reference pixel of available reference pixels.

A prediction mode in intra prediction may have a directional prediction mode using reference pixel information according to a prediction direction and a non-directional mode not using directional information when performing prediction. A mode for predicting luma information may be different from a mode for predicting chroma information and intra prediction mode information used for predicting luma information or predicted luma signal information may be utilized to predict chroma information.

When a size of a prediction unit is the same as that of a transform unit in performing intra prediction, intra prediction for a prediction unit may be performed based on a pixel at a left position of a prediction unit, a pixel at a top-left position and a pixel at a top position. However, if a size of a prediction unit is different from a size of a transform unit when intra prediction is performed, intra prediction may be performed by using a reference pixel based on a transform unit. In addition, intra prediction using NxN partition may be used only for the minimum coding unit.

An intra prediction method may generate a prediction block after applying an adaptive intra smoothing (AIS) filter to a reference pixel according to a prediction mode. A type of an AIS filter applied to a reference pixel may be different. In order to perform an intra prediction method, an intra prediction mode in a current prediction unit may be predicted from an intra prediction mode in a prediction unit around a current prediction unit. When a prediction mode in a current prediction unit is predicted by using mode information predicted from a surrounding prediction unit, information that a prediction mode in a current prediction unit is the same as a prediction mode in a surrounding prediction unit may be transmitted by using predetermined flag information if an intra prediction mode in a current prediction unit is the same as an intra prediction mode in a surrounding prediction unit, and prediction mode information of a current block may be encoded by performing entropy encoding if a prediction mode in a current prediction unit is different from a prediction mode in a surrounding prediction unit.

In addition, a residual block may be generated which includes information on a residual value that is a difference value between a prediction unit which performed prediction based on a prediction unit generated in prediction units 120 and 125 and an original block in a prediction unit. A generated residual block may be input to a transform unit 130.

A transform unit 130 may transform an original block and a residual block including residual value information in a prediction unit generated through prediction units 120 and 125 by using a transform method such as DCT (Discrete Cosine Transform), DST (Discrete Sine Transform), KLT. Whether to apply DCT, DST or KLT to transform a residual block may be determined based on intra prediction mode information in a prediction unit used to generate a residual block.

A quantization unit 135 may quantize values transformed into a frequency domain in a transform unit 130. A quantization coefficient may be changed according to a block or importance of an image. A value calculated in a quantization unit 135 may be provided to a dequantization unit 140 and a rearrangement unit 160.

A rearrangement unit 160 may perform rearrangement of a coefficient value for a quantized residual value.

A rearrangement unit 160 may change a coefficient in a shape of a two-dimensional block into a shape of a one-dimensional vector through a coefficient scan method. For example, a rearrangement unit 160 may scan a DC coefficient to a coefficient in a highfrequency domain by using a zig-zag scan method and change it into a shape of a one-dimensional vector. According to a size of a transform unit and an intra prediction mode, instead of zig-zag scan, vertical scan where a coefficient in a shape of a two-dimensional block is scanned in a column direction or horizontal scan where a coefficient in a shape of a two-dimensional block is scanned in a row direction may be used. In other words, which scan method among zig-zag scan, vertical directional scan and horizontal directional scan will be used may be determined according to a size of a transform unit and an intra prediction mode.

An entropy encoding unit 165 may perform entropy encoding based on values calculated by a rearrangement unit 160. Entropy encoding, for example, may use various encoding methods such as exponential Golomb, CAVLC (Context-Adaptive Variable Length Coding), CABAC(Context-Adaptive Binary Arithmetic Coding).

An entropy encoding unit 165 may encode a variety of information such as residual value coefficient information and block type information in a coding unit, prediction mode information, partitioning unit information, prediction unit information and transmission unit information, motion vector information, reference frame information, block interpolation information, filtering information, etc. from a rearrangement unit 160 and prediction units 120 and 125.

An entropy encoding unit 165 may perform entropy encoding for a coefficient value in a coding unit which is input from a rearrangement unit 160.

A dequantization unit 140 and an inverse transform unit 145 dequantize values quantized in a quantization unit 135 and inversely transform values transformed in a transform unit 130. A residual value generated by a dequantization unit 140 and an inverse transform unit 145 may be combined with a prediction unit predicted by a motion prediction unit, a motion compensation unit and an intra prediction unit included in prediction units 120 and 125 to generate a reconstructed block.

A filter unit 150 may include at least one of a deblocking filter, an offset correction unit and an adaptive loop filter (ALF).

A deblocking filter may remove block distortion which is generated by a boundary between blocks in a reconstructed picture. In order to determine whether deblocking is performed, whether a deblocking filter will be applied to a current block may be determined based on a pixel included in several rows or columns included in a block. When a deblocking filter is applied to a block, a strong filter or a weak filter may be applied according to required deblocking filtering strength. In addition, in applying a deblocking filter, when horizontal filtering and vertical filtering are performed, horizontal directional filtering and vertical directional filtering may be set to be processed in parallel.

An offset correction unit may correct an offset with an original image in a unit of a pixel for an image that deblocking was performed. In order to perform offset correction for a specific picture, a region where an offset will be performed may be determined after dividing a pixel included in an image into the certain number of regions and a method in which an offset is applied to a corresponding region or a method in which an offset is applied by considering edge information of each pixel may be used.

Adaptive loop filtering (ALF) may be performed based on a value obtained by comparing a filtered reconstructed image with an original image. After a pixel included in an image is divided into predetermined groups, filtering may be discriminately performed per group by determining one filter which will be applied to a corresponding group. Information related to whether to apply ALF may be transmitted per coding unit (CU) for a luma signal and a shape and a filter coefficient of an ALF filter to be applied may vary according to each block. In addition, an ALF filter in the same shape (fixed shape) may be applied regardless of a characteristic of a block to be applied.

A memory 155 may store a reconstructed block or picture calculated through a filter unit 150 and a stored reconstructed block or picture may be provided to prediction units 120 and 125 when performing inter prediction.

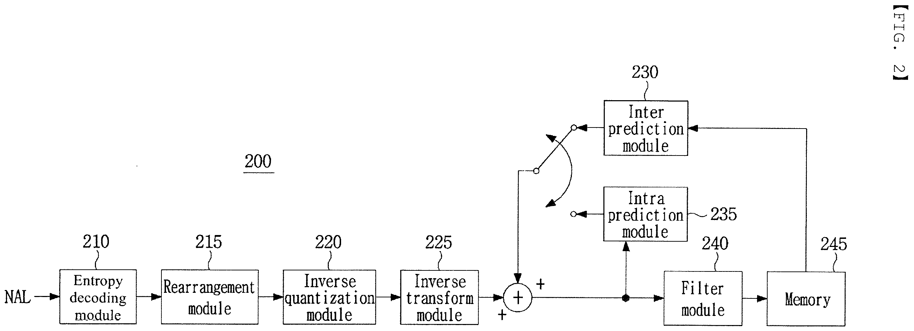

FIG. 2 is a block diagram showing an image decoding device according to an embodiment of the present disclosure.

Referring to FIG. 2, an image decoding device 200 may include an entropy decoding unit 210, a rearrangement unit 215, a dequantization unit 220, an inverse transform unit 225, prediction units 230 and 235, a filter unit 240, and a memory 245.

When an image bitstream is input from an image encoding device, an input bitstream may be decoded according to a procedure opposite to that of an image encoding device.

An entropy decoding unit 210 may perform entropy decoding according to a procedure opposite to a procedure in which entropy encoding is performed in an entropy encoding unit of an image encoding device. For example, in response to a method performed in an image encoding device, various methods such as Exponential Golomb, CAVLC (Context-Adaptive Variable Length Coding), CABAC (Context-Adaptive Binary Arithmetic Coding) may be applied.

An entropy decoding unit 210 may decode information related to intra prediction and inter prediction performed in an encoding device.

A rearrangement unit 215 may perform rearrangement based on a method that a bitstream entropy-decoded in an entropy decoding unit 210 is rearranged in an encoding unit. Coefficients expressed in a form of a one-dimensional vector may be rearranged by being reconstructed into coefficients in a form of a two-dimensional block. A rearrangement unit 215 may receive information related to coefficient scanning performed in an encoding unit and perform rearrangement through a method in which scanning is inversely performed based on scanning order performed in a corresponding encoding unit.

A dequantization unit 220 may perform dequantization based on a quantization parameter provided from an encoding device and a coefficient value of a rearranged block.

An inverse transform unit 225 may perform transform performed in a transform unit, i.e., inverse transform for DCT, DST, and KLT, i.e., inverse DCT, inverse DST and inverse KLT for a result of quantization performed in an image encoding device. Inverse transform may be performed based on a transmission unit determined in an image encoding device. In an inverse transform unit 225 of an image decoding device, a transform technique (for example, DCT, DST, KLT) may be selectively performed according to a plurality of information such as a prediction method, a size of a current block, a prediction mode, etc.

Prediction units 230 and 235 may generate a prediction block based on information related to generation of a prediction block provided from an entropy decoding unit 210 and pre-decoded block or picture information provided from a memory 245.

As described above, when a size of a prediction unit is the same as a size of a transform unit in performing intra prediction in the same manner as an operation in an image encoding device, intra prediction for a prediction unit may be performed based on a pixel at a left position of a prediction unit, a pixel at a top-left position and a pixel at a top position, but when a size of a prediction unit is different from a size of a transform unit in performing intra prediction, intra prediction may be performed by using a reference pixel based on a transform unit. In addition, intra prediction using N×N partitioning may be used only for the smallest coding unit.

Prediction units 230 and 235 may include a prediction unit determination unit, an inter prediction unit and an intra prediction unit. A prediction unit determination unit may receive a variety of information such as prediction unit information, prediction mode information of an intra prediction method, motion prediction-related information of an inter prediction method, etc. which are input from an entropy decoding unit 210, divide a prediction unit in a current coding unit and determine whether a prediction unit performs inter prediction or intra prediction. An inter prediction unit 230 may perform inter prediction for a current prediction unit based on information included in at least one picture of a previous picture or a subsequent picture of a current picture including a current prediction unit by using information necessary for inter prediction in a current prediction unit provided from an image encoding device. Alternatively, inter prediction may be performed based on information on some regions which are pre-reconstructed in a current picture including a current prediction unit.

In order to perform inter prediction, whether a motion prediction method in a prediction unit included in a corresponding coding unit is a skip mode, a merge mode, an AMVP mode, or an intra block copy mode may be determined based on a coding unit.

An intra prediction unit 235 may generate a prediction block based on pixel information in a current picture. When a prediction unit is a prediction unit which performed intra prediction, intra prediction may be performed based on intra prediction mode information in a prediction unit provided from an image encoding device. An intra prediction unit 235 may include an adaptive intra smoothing (AIS) filter, a reference pixel interpolation unit and a DC filter. As a part performing filtering on a reference pixel of a current block, an AIS filter may be applied by determining whether a filter is applied according to a prediction mode in a current prediction unit. AIS filtering may be performed for a reference pixel of a current block by using AIS filter information and a prediction mode in a prediction unit provided from an image encoding device. When a prediction mode of a current block is a mode which does not perform AIS filtering, an AIS filter may not be applied.

When a prediction mode in a prediction unit is a prediction unit which performs intra prediction based on a pixel value which interpolated a reference pixel, a reference pixel interpolation unit may interpolate a reference pixel to generate a reference pixel in a unit of a pixel equal to or less than an integer value. When a prediction mode in a current prediction unit is a prediction mode which generates a prediction block without interpolating a reference pixel, a reference pixel may not be interpolated. A DC filter may generate a prediction block through filtering when a prediction mode of a current block is a DC mode.

A reconstructed block or picture may be provided to a filter unit 240. A filter unit 240 may include a deblocking filter, an offset correction unit and an ALF.

Information on whether a deblocking filter was applied to a corresponding block or picture and information on whether a strong filter or a weak filter was applied when a deblocking filter was applied may be provided from an image encoding device. Information related to a deblocking filter provided from an image encoding device may be provided in a deblocking filter of an image decoding device and deblocking filtering for a corresponding block may be performed in an image decoding device.

An offset correction unit may perform offset correction on a reconstructed image based on offset value information, a type of offset correction, etc. applied to an image when performing encoding.

An ALF may be applied to a coding unit based on information on whether ALF is applied, ALF coefficient information, etc. provided from an encoding device. Such ALF information may be provided by being included in a specific parameter set.

A memory 245 may store a reconstructed picture or block for use as a reference picture or a reference block and provide a reconstructed picture to an output unit.

As described above, hereinafter, in an embodiment of the present disclosure, a coding unit is used as a term of a coding unit for convenience of a description, but it may be a unit which performs decoding as well as encoding.

In addition, as a current block represents a block to be encoded/decoded, it may represent a coding tree block (or a coding tree unit), a coding block (or a coding unit), a transform block (or a transform unit) or a prediction block (or a prediction unit), etc. according to an encoding/decoding step. In this specification, 'unit' may represent a base unit for performing a specific encoding/decoding process and 'block' may represent a pixel array in a predetermined size. Unless otherwise classified, 'block' and 'unit' may be used interchangeably. For example, in the after-described embodiment, it may be understood that a coding block (a coding block) and a coding unit (a coding unit) are used interchangeably.

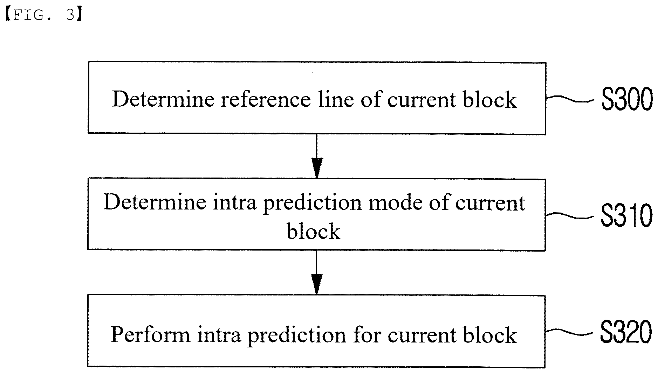

FIG. 3 shows an image encoding/decoding method performed by an image encoding/decoding device according to the present disclosure.

Referring to FIG. 3, a reference line for intra prediction of a current block may be determined S300.

A current block may use one or more of a plurality of reference line candidates pre-defined in an image encoding/decoding device as a reference line for intra prediction. Here, a plurality of pre-defined reference line candidates may include a neighboring reference line adjacent to a current block to be decoded and N non-neighboring reference lines 1-sample to N-samples away from a boundary of a current block. N may be an integer of 1, 2, 3 or more. Hereinafter, for convenience of a description, it is assumed that a plurality of reference line candidates available for a current block consist of a neighboring reference line candidate and three non-neighboring reference line candidates, but it is not limited thereto. In other words, of course, a plurality of reference line candidates available for a current block may include four or more non-neighboring reference line candidates.

An image encoding device may determine an optimal reference line candidate among a plurality of reference line candidates and encode an index for specifying it. An image decoding device may determine a reference line of a current block based on an index signaled through a bitstream. The index may specify any one of a plurality of reference line candidates. A reference line candidate specified by the index may be used as a reference line of a current block.

The number of indexes signaled to determine a reference line of a current block may be 1, 2 or more. As an example, when the number of indexes signaled above is 1, a current block may perform intra prediction by using only a single reference line candidate specified by the signaled index among a plurality of reference line candidates. Alternatively, when the number of indexes signaled above is at least two, a current block may perform intra prediction by using a plurality of reference line candidates specified by a plurality of indexes among a plurality of reference line candidates.

Referring to FIG. 3, an intra prediction mode of a current block may be determined S310.

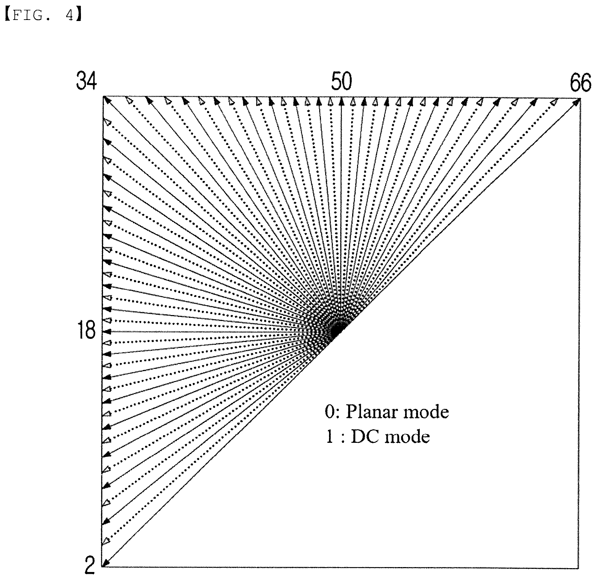

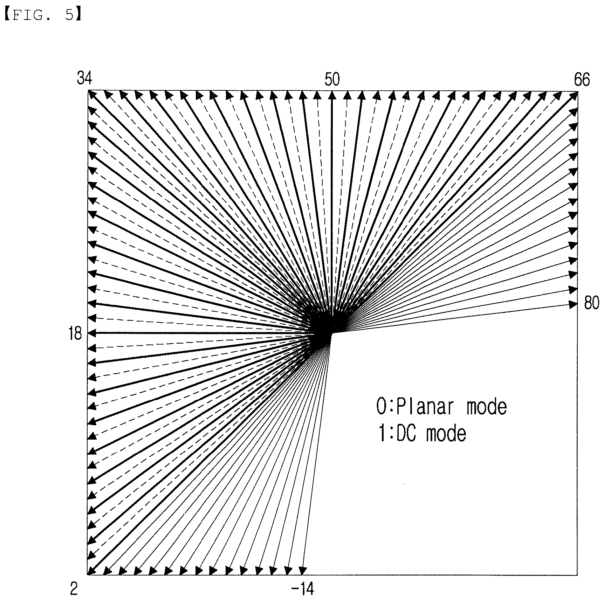

An intra prediction mode of a current block may be determined among a plurality of intra prediction modes pre-defined in an image encoding/decoding device. The plurality of pre-defined intra prediction modes are described by referring to FIGS. 4 and 5.

FIG. 4 shows an example of a plurality of intra prediction modes according to the present disclosure.

Referring to FIG. 4, a plurality of intra prediction modes pre-defined in an image encoding/decoding device may be composed of a non-directional mode and a directional mode. A non-directional mode may include at least one of a planar mode or a DC mode. A directional mode may include directional mode 2 to 66.

A directional mode may be expanded more than shown in FIG. 4. FIG. 5 shows an example in which a directional mode is expanded.

In FIG. 5, it was illustrated that mode -1 to mode -14 and mode 67 to mode 80 are added. These directional modes may be referred to as a wide-angle intra prediction mode. Whether to use a wide-angle intra prediction mode may be determined according to a shape of a current block. As an example, if a current block is a non-square block whose width is greater than a height, some directional modes (e.g., No. 2 to No. 15) may be transformed to a wide-angle intra prediction mode between No. 67 and No. 80. On the other hand, if a current block is a non-square block whose height is greater than a width, some directional modes (e.g., No. 53 to No. 66) may be transformed to a wide-angle intra prediction mode between No. -1 and No. -14.

A scope of available wide-angle intra prediction modes may be adaptively determined according to a width-to-height ratio of a current block. Table 1 shows a scope of available wide-angle intra prediction modes according to a width-to-height ratio of a current block.

[Table 1]

| Width/Height | Available wide-angle intra prediction mode range |
|---|---|
| W/H = 16 | 67~80 |
| W/H = 8 | 67~78 |
| W/H = 4 | 67~76 |
| W/H = 2 | 67~74 |
| W/H = 1 | None |
| W/H = 1/2 | -1~-8 |
| W/H = 1/4 | -1~-10 |
| W/H = 1/8 | -1~-12 |
| W/H = 1/16 | -1~-14 |

Among the plurality of intra prediction modes, K candidate modes (most probable mode, MPM) may be selected. A candidate list including a selected candidate mode may be generated. An index indicating any one of candidate modes belonging to a candidate list may be signaled. An intra prediction mode of a current block may be determined based on a candidate mode indicated by the index. As an example, a candidate mode indicated by the index may be configured as an intra prediction mode of a current block. Alternatively, an intra prediction mode of a current block may be determined based on a value of a candidate mode indicated by the index and a predetermined difference value. The difference value may be defined as a difference between a value of an intra prediction mode of the current block and a value of a candidate mode indicated by the index. The difference value may be signaled through a bitstream. Alternatively, the difference value may be a value pre-defined in an image encoding/decoding device. Alternatively, an intra prediction mode of a current block may be determined based on a flag showing whether a mode identical to an intra prediction mode of a current block exists in the candidate list. As an example, when the flag is a first value, an intra prediction mode of a current block may be determined from the candidate list. In this case, an index indicating any one of a plurality of candidate modes belonging to a candidate list may be signaled. A candidate mode indicated by the index may be configured as an intra prediction mode of a current block. On the other hand, when the flag is a second value, any one of the remaining intra prediction modes may be configured as an intra prediction mode of a current block. The remaining intra prediction modes may refer to a mode excluding a candidate mode belonging to the candidate list among a plurality of pre-defined intra prediction modes. When the flag is a second value, an index indicating any one of the remaining intra prediction modes may be signaled. An intra prediction mode indicated by the signaled index may be configured as an intra prediction mode of a current block. An intra prediction mode of a chroma block may be selected among intra prediction mode candidates of a plurality of chroma blocks. To this end, index information indicating one of intra prediction mode candidates of a chroma block may be explicitly encoded and signaled through a bitstream. Table 2 illustrates intra prediction mode candidates of a chroma block.

[Table 2]

| Index | Intra Prediction Mode Candidate for Chroma Block | | | | |
|---|---|---|---|---|---|
| | Luma Mode: 0 | Luma Mode: 50 | Luma Mode: 18 | Luma Mode: 1 | Others |
| 0 | 66 | 0 | 0 | 0 | 0 |
| 1 | 50 | 66 | 50 | 50 | 50 |
| 2 | 18 | 18 | 66 | 18 | 18 |
| 3 | 1 | 1 | 1 | 66 | 1 |
| 4 | DM | | | | |

In an example of Table 2, a direct mode (DM) refers to setting an intra prediction mode of a luma block existing at the same position as a chroma block as an intra prediction mode of a chroma block. As an example, if an intra prediction mode (a luma mode) of a luma block is No. 0 (a planar mode) and an index indicates No. 2, an intra prediction mode of a chroma block may be determined as a horizontal mode (No. 18).

As an example, if an intra prediction mode (a luma mode) of a luma block is No. 1 (a DC mode) and an index indicates No. 0, an intra prediction mode of a chroma block may be determined as a planar mode (No. 0).

As a result, an intra prediction mode of a chroma block may be also set as one of intra prediction modes shown in FIG. 4 or FIG. 5. An intra prediction mode of a current block may be used to determine a reference line of a current block, and in this case, S310 may be performed before S300.

Referring to FIG. 3, intra prediction may be performed for a current block based on a reference line and an intra prediction mode of a current block S320.

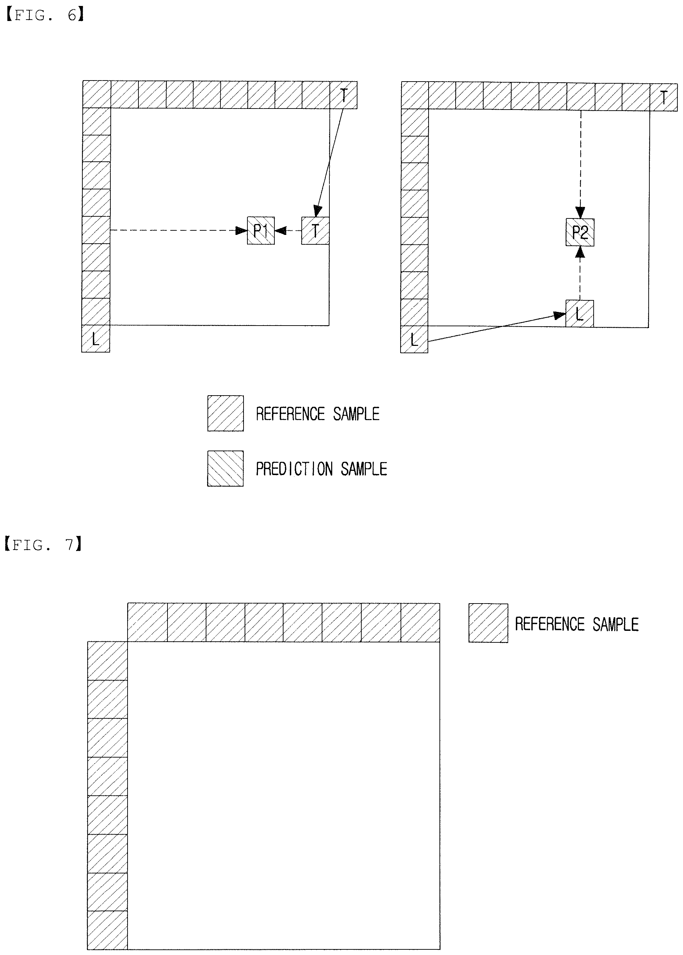

Hereinafter, an intra prediction method per intra prediction mode is described in detail by referring to FIGS. 6 to 8. However, for convenience of a description, it is assumed that a single reference line is used for intra prediction of a current block, but even when a plurality of reference lines are used, an intra prediction method described later may be applied in the same/similar manner.

FIG. 6 shows an intra prediction method based on a planar mode according to the present disclosure.

Referring to FIG. 6, T represents a reference sample position at a top-right corner of a current block and L represents a reference sample positioned at a bottom-left corner of a current block. P1 may be generated through interpolation in a horizontal direction. As an example, P1 may be generated by interpolating T with a reference sample positioned on the same horizontal line as P1. P2 may be generated through interpolation in a vertical direction. As an example, P2 may be generated by interpolating L with a reference sample positioned on the same vertical line as P2. A current sample in a current block may be predicted through a weighted sum of P1 and P2 as in Equation 3 below.

【Equation 1】

$$(\alpha \times P1 + \beta \times P2)/(\alpha + \beta)$$

In Equation 1, weight $\alpha$ and $\beta$ may be determined by considering a width and a height of a current block. According to a width and a height of a current block, weight $\alpha$ and $\beta$ may have the same value or a different value. If a width and a height of a current block are the same, weight $\alpha$ and $\beta$ may be configured to be the same and a prediction sample of a current sample may be configured as an average value of P1 and P2. When a width and a height of a current block are not the same, weight $\alpha$ and $\beta$ may have a different value. As an example, when a width is greater than a height, a smaller value may be configured to a weight corresponding to a width of a current block and a larger value may be configured to a weight corresponding to a height of a current block. Conversely, when a width is greater than a height, a larger value may be configured to a weight corresponding to a width of a current block and a smaller value may be configured to a weight corresponding to a height of a current block. Here, a weight corresponding to a width of a current block may refer to $\beta$ and a weight corresponding to a height of a current block may refer to $\alpha$.

FIG. 7 shows an intra prediction method based on a DC mode according to the present disclosure.

Referring to FIG. 7, an average value of a surrounding sample adjacent to a current block may be calculated, and a calculated average value may be configured as a prediction value of all samples in a current block. Here, a surrounding samples may include a top reference sample and a left reference sample of a current block. However, according to a shape of a current block, an average value may be calculated by using only a top reference sample or a left reference sample. As an example, when a width of a current block is greater than a height, an average value may be calculated by using only a top reference sample of a current block. Alternatively, when a ratio of a width and a height of a current block is greater than or equal to a predetermined threshold value, an average value may be calculated by using only a top reference sample of a current block. Alternatively, when a ratio of a width and a height of a current block is smaller than or equal to a predetermined threshold value, an average value may be calculated by using only a top reference sample of a current block. On the other hand, when a width of a current block is smaller than a height, an average value may be calculated by using only a left reference sample of a current block. Alternatively, when a ratio of a width and a height of a current block is smaller than or equal to a predetermined threshold value, an average value may be calculated by using only a left reference sample of a current block. Alternatively, when a ratio of a width and a height of a current block is greater than or equal to a predetermined threshold value, an average value may be calculated by using only a left reference sample of a current block.

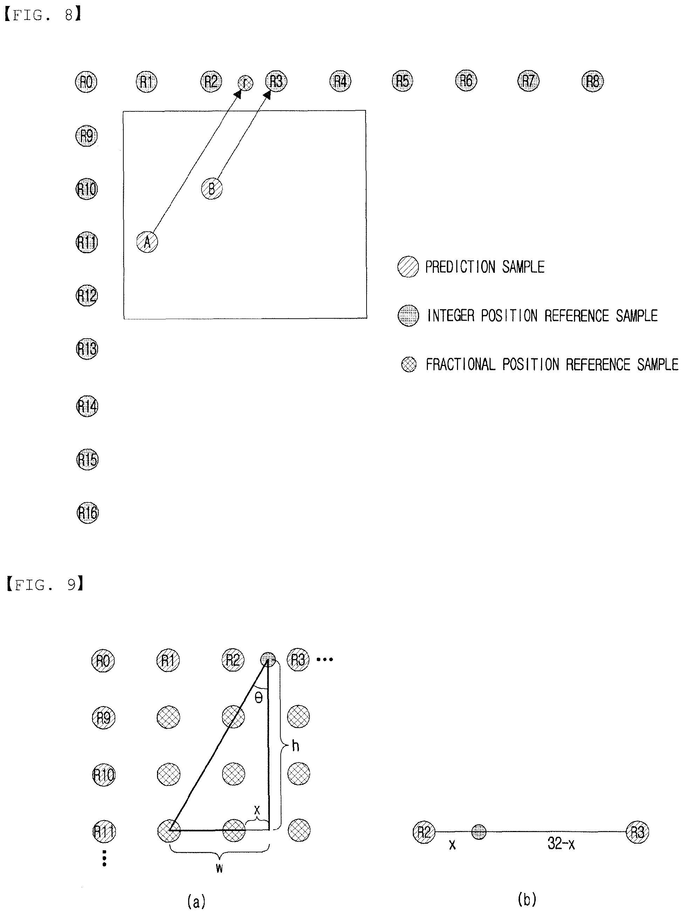

FIG. 8 shows an intra prediction method based on a directional mode according to the present disclosure.

When an intra prediction mode of a current block is a directional mode, projection may be performed to a reference line according to an angle of a corresponding directional mode. When a reference sample exists at a projected position, a corresponding reference sample may be configured as a prediction sample of a current sample. If a reference sample does not exist at a projected position, a sample corresponding to a projected position may be generated by using one or more surrounding samples neighboring a projected position. As an example, interpolation may be performed based on two or more surrounding samples neighboring bidirectionally based on a projected position to generate a sample corresponding to a projected position. Alternatively, one surrounding sample neighboring a projected position may be configured as a sample corresponding to a projected position. In this case, among a plurality of surrounding samples neighboring a projected position, a surrounding sample closest to a projected position may be used. A sample corresponding to a projected position may be configured as a prediction sample of a current sample.

Referring to FIG. 8, for current sample B, when projection is performed to a reference line according to an angle of an intra prediction mode at a corresponding position, a reference sample exists at a projected position (i.e., a reference sample at an integer position, R3). In this case, a reference sample at a projected position may be configured as a prediction sample of current sample B. For current sample A, when projection is performed to a reference line according to an angle of an intra prediction mode at a corresponding position, a reference sample (i.e., a reference sample at an integer position) does not exists at a projected position. In this case, interpolation may be performed based on surrounding samples (e.g., R2 and R3) neighboring a projected position to generate a sample (r) at a fractional position. A generated sample (r) at a fractional position may be configured as a prediction sample of current sample A.

FIG. 9 shows a method for deriving a sample at a fractional position.

In an example of FIG. 9, variable h refers to a vertical distance (i.e., a vertical distance) from a position of prediction sample A to a reference sample line, and variable w refers to a horizontal distance (i.e., a horizontal distance) from a position of prediction sample A to a fractional position sample. In addition, variable $\theta$ refers to an angle which is predefined according to directivity of an intra prediction mode, and variable x refers to a fractional position.

Variable w may be derived as in Equation 2 below.

【Equation 2】

$$w = h \tan\theta$$

Then, if an integer position is removed from variable w, finally, a fractional position may be derived.

A fractional position sample may be generated by interpolating adjacent integer position reference samples. As an example, a fractional position reference sample at a x position may be generated by interpolating integer position reference sample R2 and integer position reference sample R3.

In deriving a fractional position sample, a scaling factor may be used to avoid a real number operation. As an example, when scaling factor f is set as 32, as in an example shown in FIG. 8(b), a distance between neighboring integer reference samples may be set as 32, not 1.

In addition, a tangent value for angle $\theta$ determined according to directivity of an intra prediction mode may be also scaled up by using the same scaling factor (e.g., 32).

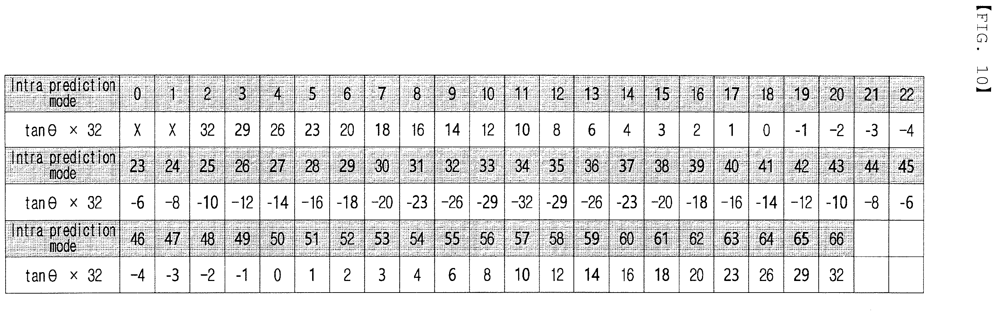

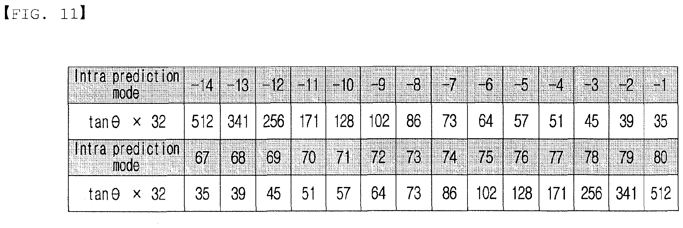

FIGS. 10 and 11 show that a tangent value for an angle is scaled 32 times per intra prediction mode.

FIG. 10 shows a scaled result of a tangent value for a non-wide angle intra prediction mode, and FIG. 11 shows a scaled result of a tangent value for a wide angle intra prediction mode.

If a tangent value (tan$\theta$) for an angle value of an intra prediction mode is positive, intra prediction may be performed by using only one of reference samples belonging to a top line of a current block (i.e., top reference samples) or reference samples belonging to a left line of a current block (i.e., left reference samples). Meanwhile, when a tangent value for an angle value of an intra prediction mode is negative, both reference samples at a top position and reference samples at a left position are used.

In this case, in order to simplify implementation, left reference samples may be projected to the top or may be projected to the left to arrange reference samples in a 1D array form, and reference samples in a 1D array form may be used to perform intra prediction.

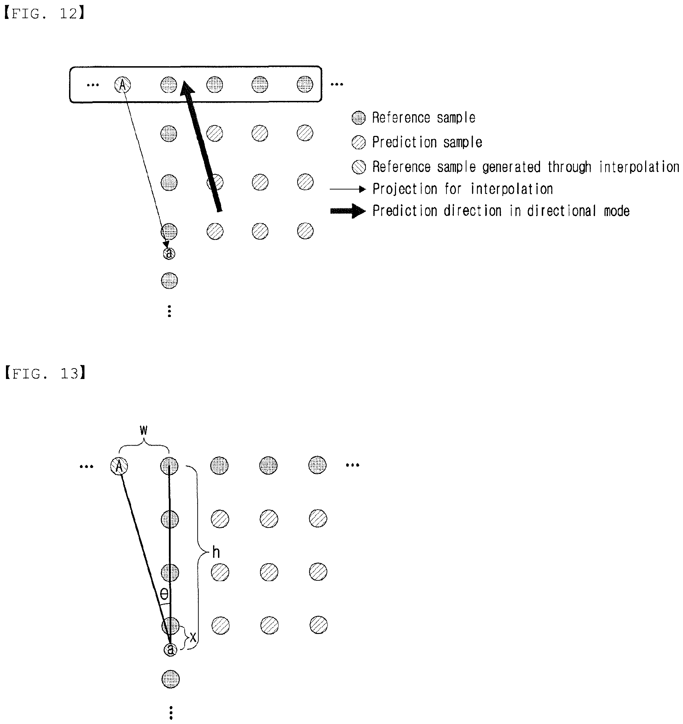

FIG. 12 is a diagram illustrating an intra prediction aspect when a directional mode is one of mode no. 34 to mode no. 49.

When an intra prediction mode of a current block is one of mode no. 34 to mode no. 49, intra prediction is performed by using not only top reference samples of a current block, but also left reference samples. In this case, as in an example shown in FIG. 12, a reference sample of a top line may be generated by copying a reference sample at a left position of a current block to a position of a top line or by interpolating reference samples at a left position.

As an example, when a reference sample for position A on the top of a current block is obtained, considering directivity of an intra prediction mode of a current block, projection may be performed on a left line of a current block at position A on a top line. If a projected position is called a, a value corresponding to position a may be copied or a fractional position value corresponding to a may be generated and set as a value of position A. As an example, if position a is an integer position, a value of position A may be generated by copying an integer position reference sample. On the other hand, when position a is a fractional position, a reference sample at a top position of position a and a reference sample at a bottom position of position a may be interpolated and an interpolated value may be set as a value of position A. Meanwhile, at position A on the top of a current block, a direction projected to a left line of a current block may be parallel to and opposite to a direction of an intra prediction mode of a current block.

FIG. 13 is a diagram for describing an example of generating a top reference sample by interpolating left reference samples.

In FIG. 13, variable h represents a horizontal distance between position A on a top line and position a on a left line. Variable w represents a vertical distance between position A on a top line and position a on a left line. In addition, variable θ refers to an angle predefined according to directivity of an intra prediction mode, and variable x refers to a fractional position.

Variable h may be derived as in Equation 3 below.

【Equation 3】

$$h = w / \tan\theta \quad h = w/\tan\theta$$

Afterwards, if an integer position is removed from variable h, a fractional position may be derived finally.

In deriving a fractional position sample, a scaling factor may be used to avoid a real number operation. As an example, a tangent value for variable θ may be scaled by using scaling factor f1. Here, since a direction projected to a left line is parallel and opposite to a directional prediction mode, a scaled tangent value shown in FIGS. 10 and 11 may be used.

When scaling factor f1 is applied, Equation 3 may be modified and used as in Equation 4 below.

【Equation 4】

$$h = (w * f1 * f2)/(f1 * \tan\theta)$$

In the same way as above, a 1D reference sample array may be configured only with reference samples belonging to a top line. As a result, intra prediction for a current block may be performed by using only top reference samples composed of 1D arrays.

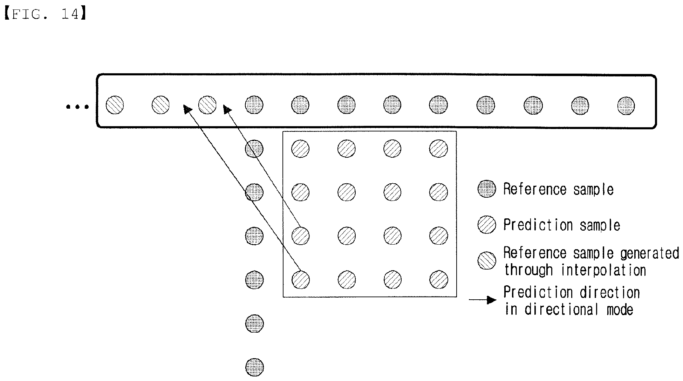

FIG. 14 shows an example in which intra prediction is performed by using reference samples arranged in a 1D array.

As in an example shown in FIG. 14, left reference samples may be projected to generate top reference samples, and accordingly, prediction samples of a current block may be obtained by using only reference samples belonging to a top line.

Contrary to what is shown in FIGS. 12 and 14, top reference sample may be projected to a left line to configure a 1D reference sample array only with reference samples belonging to a left line. Specifically, for mode no. 19 to no. 33 of directional modes in which a tangent value (tanθ) for an angle of a directional mode is negative, reference samples belonging to a top line may be projected to a left line to generate a left reference sample.

An intra prediction mode of a current block may be derived by using reference samples around a current block. Specifically, based on a result obtained by applying a plurality of intra prediction modes to a reference region, an optimal intra prediction mode for a current block may be determined.

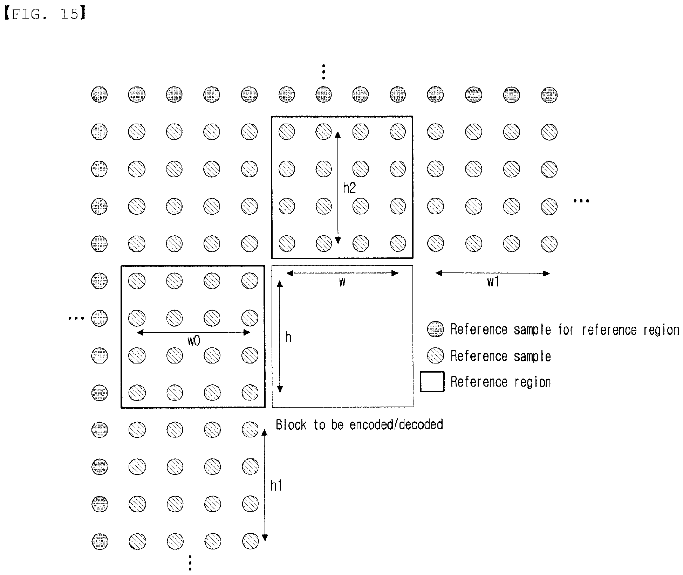

FIG. 15 is a diagram illustrating a configuration of a reference region of a current block and reference samples for performing intra prediction on the reference area.

For convenience of a description, it is assumed that both width w and height h of a current block are 4.

As in an example shown in FIG. 15, a reference region may include a top reference region and a left reference region. A top reference region may include h0 reference sample rows and a left reference region may include w0 reference sample columns. In other words, h0 may represent a height of a top reference region and w0 may represent a width of a left reference region.

h0, a height of a top reference region, and w0, a width of a left reference region, may be a natural number equal to or greater than 1. h0, a height of a top reference region, and w0, a width of a left reference region, may be fixed in an encoder and a decoder. As an example, h0, a height of a top reference region, and w0, a width of a left reference region, may be fixed as 4 or 2.

Alternatively, according to a width and/or a height of a current block, value of h0, a height of a top reference region, and w0, a width of a left reference region, may be determined. As an example, any one of h0, a height of a top reference region, and w0, a width of a left reference region, may be set to be the same as a width of a current block and the other may be set to be the same as a height of a current block. Alternatively, any one of h0, a height of a top reference region, and w0, a width of a left reference region, may be set as 1/N of a width of a current block and the other may be set as 1/N of a height of a current block. Here, N may be a natural number equal to or greater than 1.

Alternatively, based on at least one of a shape of a current block, whether Intra Sub-Partitioning (ISP) is applied to a current block or whether a current block borders a boundary of a CTU, a height of a top reference region and/or a width of a left reference region may be determined adaptively.

Alternatively, a size of a top reference region and a left reference region may be set to be the same as a size of a current block. As an example, when a current block has a 4x4 size, as in an example shown in FIG. 15, a top reference region and a left reference region may also have a 4x4 size, respectively.

Alternatively, a top reference region may be defined as a square region based on a width of a current block, and a left reference region may be defined as a square region based on a height of a current block. As an example, if a current block has a wxh size, a top reference region may be set to have a square shape in a wxw size, and a left reference region may be set to have a square shape in a hxh size.

Alternatively, a size of a top reference region and a size of a left reference region may be determined based on whether a size of a current block is equal to or greater than a threshold value. Here, a size of a current block may be at least one of a width, a height or a product of a width and a height of a current block. As an example, if a size of a current block is equal to or greater than a threshold value, a size of a top reference region and/or a left reference region may be set as 4x4. On the other hand, if a size of a current block is not greater than a threshold value, a size of a top reference region and/or a left reference region may be set as 2x2.

A reference region may be also set to have a non-square shape. As an example, a top reference region may be set as a size of (h0/2)xh0 or 2h0xh0, and a left reference region may be set as a size of w0x(w0/2) or w0x2w0.

According to a shape of a current block, a shape of a reference region may be determined. As an example, if a current block is non-square, at least one of a top reference region and a left reference region may be set to be non-square.

Intra prediction for a reference region may be performed by using reference samples adjacent to a reference region.

Specifically, as in an example shown in FIG. 15, intra prediction for a top reference region and a left reference region may be performed by using reference samples belonging to a top reference line adjacent to the uppermost row of a top reference region and a left reference line adjacent to the leftmost column of a left reference region.

In FIG. 15, variable w1 and variable h1 are a variable for showing a range of reference samples for a reference region. In FIG. 15, it is assumed that both variable w1 and variable h1 are 4. Variable w1 and variable h1 may be 0 or a natural number equal to or greater than 1. In this case, variable w1 and/or variable h1 may be predefined in an encoder and a decoder.

As another example, at least one of variable w1 or variable h1 may be determined based on at least one of a size/a shape of a current block, whether ISP is applied to a current block or whether a current block is adjacent to a boundary of a CTU. As an example, if at least one of a width or a height of a current block is greater than a threshold value, at least one of w1 or h1 may be set as 8 or 16. On the other hand, if at least one of a width or a height of a current block is not greater than a threshold value, at least one of w1 or h1 may be set as 4.

Alternatively, variable w1 may be determined based on w, a width of a current block, and variable h1 may be determined based on h, a height of a current block. Alternatively, variable w1 may be determined based on a width of a top reference region, and variable h1 may be determined based on a height of a left reference region.

If a current block is square, w1 and h1 may be set equally. On the other hand, if a current block is non-square, w1 and h1 may be set differently.

As in FIG. 15, when reference samples for a reference region are set, intra prediction may be performed based on the same reference samples for each of a left reference region and a top reference region.

Based on reference samples for a reference region, intra prediction may be performed for a reference region. Specifically, based on a plurality of intra prediction modes, intra prediction may be performed multiple times for each of a top reference region and a left reference region.

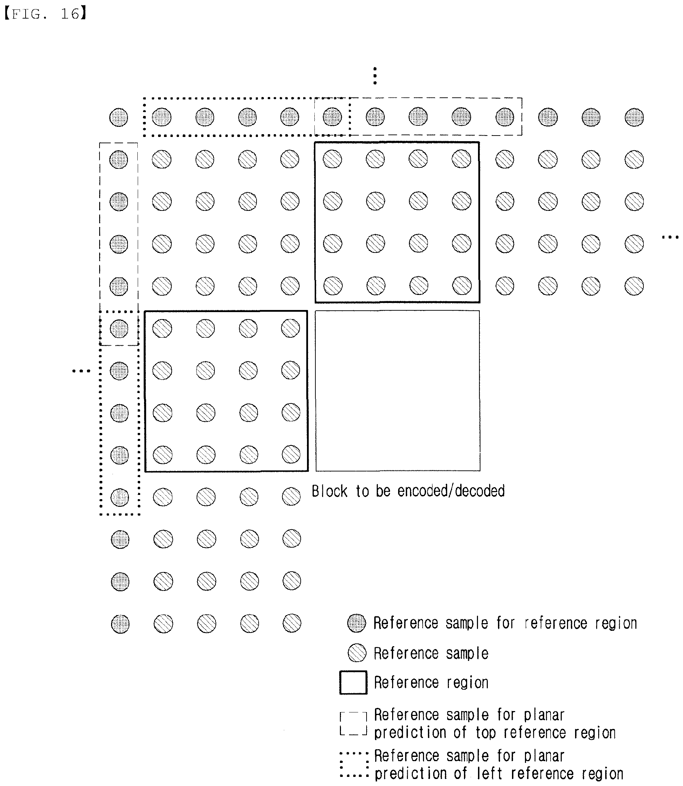

FIGS. 16 to 18 are a diagram illustrating how intra prediction is performed on a top reference region and a left reference region.

FIG. 16 shows reference samples used to perform intra prediction based on a planar mode on each of a top reference region and a left reference region.

As in a shown example, planar prediction for a top reference region may be performed based on top reference samples adjacent to a top reference region and left reference samples not adjacent to a top reference region. In addition, planar prediction for a left reference region may be performed based on top reference samples not adjacent to a left reference region and left reference samples adjacent to a left reference region.

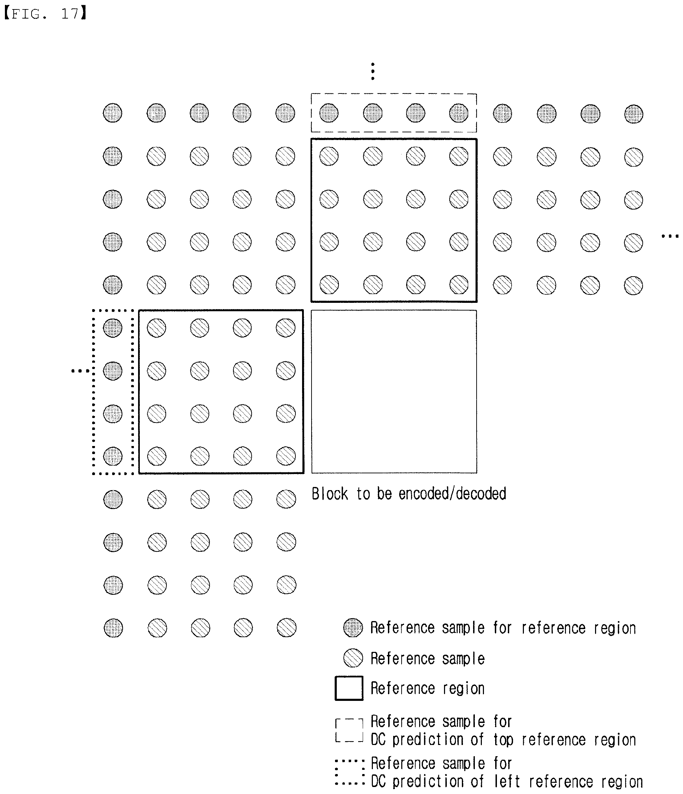

FIG. 17 shows reference samples used to perform intra prediction based on a DC mode on each of a top reference region and a left reference region.

As in a shown example, an average value (i.e., DCval) for a top reference region may be derived based on reference samples adjacent to the top of a top reference region. In addition, an average value (i.e., DCval) for a left reference region may be derived based on reference samples adjacent to the left of a left reference region.

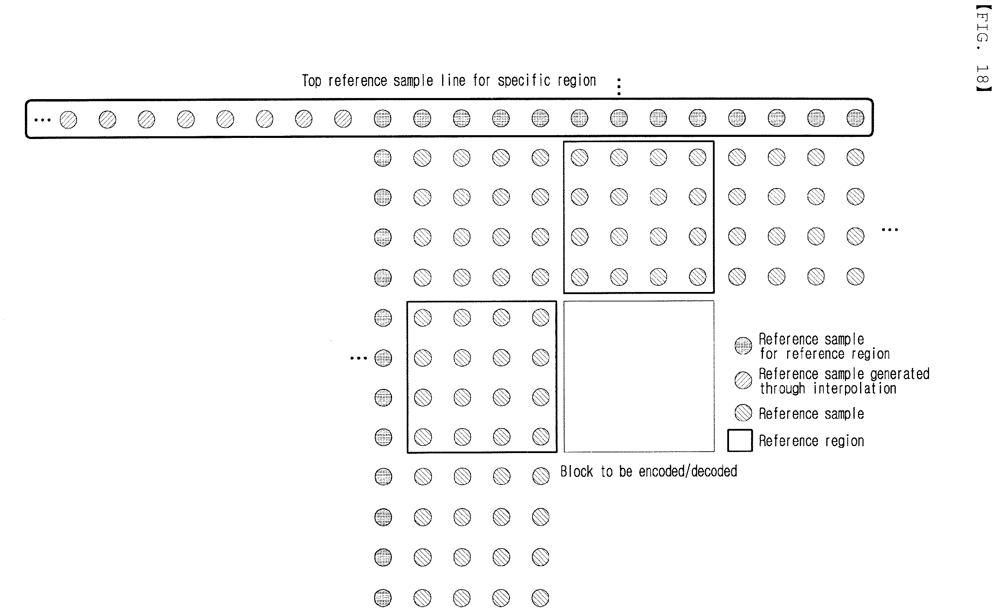

FIG. 18 shows an example in which reference samples are arranged in a 1D array form for intra prediction based on a directional mode.

As an example, for directional modes that a tangent value for an angle is negative, reference samples may be rearranged in a 1D array form. For example, if intra prediction for mode no. 34 to mode no. 49 is performed, as in an example shown in FIG. 18, a value of a top reference sample belonging to a top reference line may be obtained by copying a left reference sample or using a value obtained by interpolating left reference samples. Accordingly, intra prediction for mode no. 34 to mode no. 49 may be performed based on top reference samples in a 1D array form.

Although not shown, if intra prediction for mode no. 19 to mode no. 33 is performed, a value of a top reference sample belonging to a left reference line may be obtained by copying a top reference sample or using a value obtained by interpolating top reference samples. Accordingly, intra prediction for mode no. 19 to mode no. 33 may be performed based on left reference samples in a 1D array form.

As in an example shown in FIG. 15 to FIG. 18, when reference samples for a top reference region and a left reference region are set, a problem occurs in which some of reference samples are too far away from a top reference region or a left reference region.

In order to increase a correlation between reference samples and a reference region, reference samples for a top reference region may be composed of samples adjacent to a top reference region, and reference samples for a left reference region may be composed of samples adjacent to a left reference region. Specifically, samples belonging to a top reference line adjacent to the uppermost row of a top reference region and samples belonging to a left reference line adjacent to the leftmost column of a top reference region may be set as reference samples for a top reference region. Alternatively, samples belonging to a top reference line adjacent to the uppermost row of a left reference region and samples belonging to a left reference line adjacent to the leftmost column of a left reference region may be set as reference samples for a left reference region.

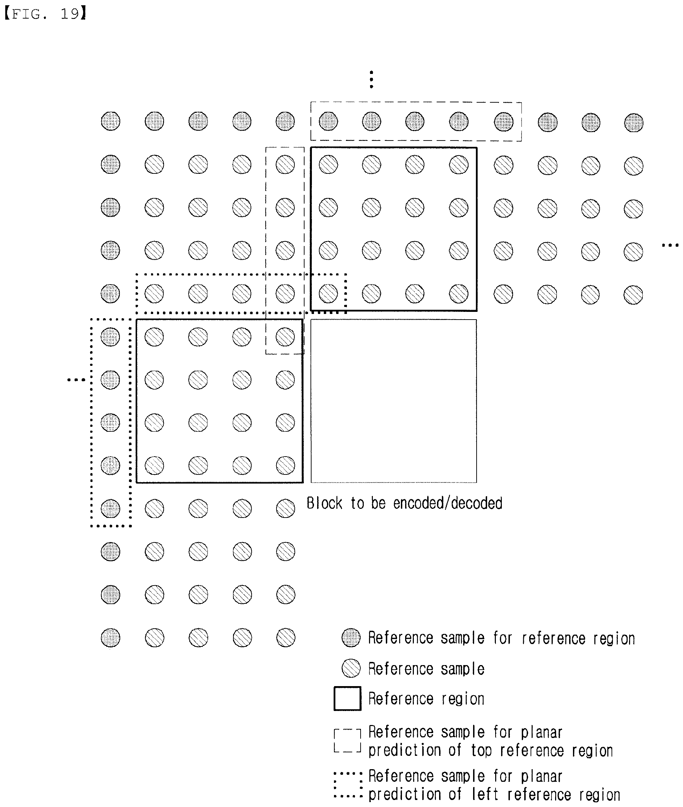

In this case, an intra prediction aspect shown in FIGS. 16 to 18 may be changed as in FIGS. 19 to 21 below.

FIG. 19 illustrates reference samples used for intra prediction based on a planar mode for each of a top reference region and a left reference region.

Intra prediction based on a planar mode for a left reference region may be performed by using top reference samples adjacent to the top of a left reference region and left reference samples adjacent to the left of a left reference region. In addition, intra prediction based on a planar mode for a top reference region may be performed by using top reference samples adjacent to the top of a top reference region and left reference samples adjacent to the left of a top reference region.

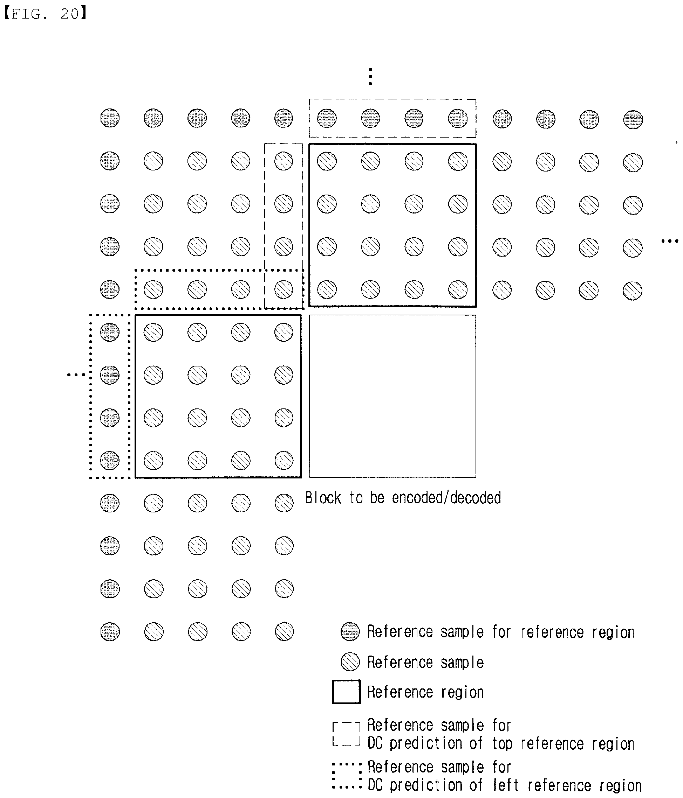

FIG. 20 illustrates reference samples used for intra prediction based on a DC mode for each of a top reference region and a left reference region.

An average value (i.e., DCval) for a left reference region may be derived by using top reference samples adjacent to the top of a left reference region and left reference samples adjacent to the left of a left reference region. In addition, an average value (i.e., DCval) for a top reference region may be derived by using top reference samples adjacent to the top of a top reference region and left reference samples adjacent to the left of a top reference region.

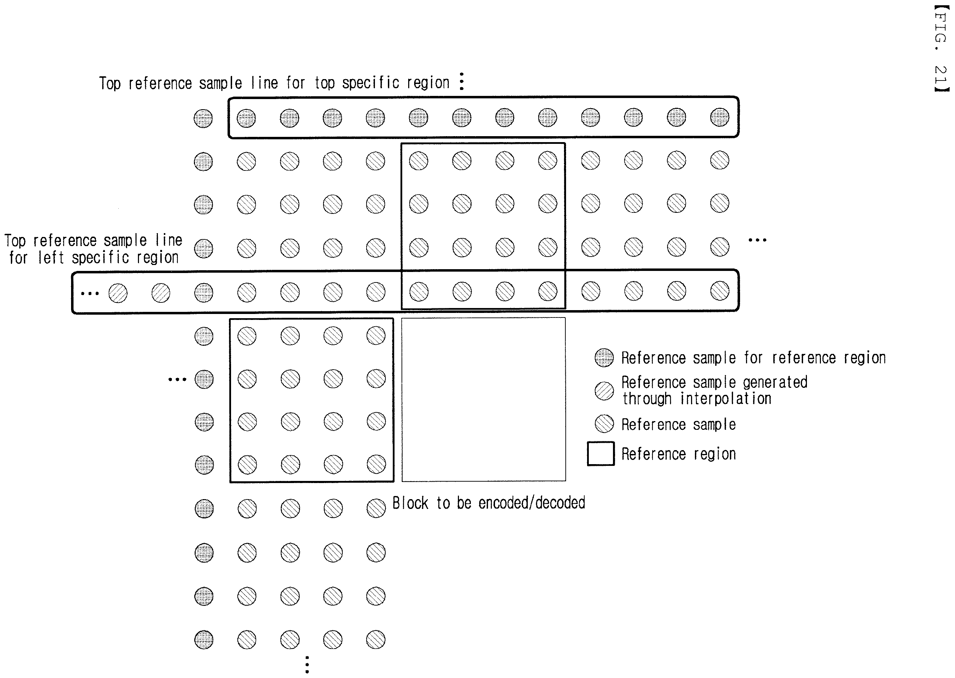

FIG. 21 shows an example in which reference samples are arranged in a 1D array form for intra prediction based on a directional mode.

For a left reference region, top reference samples adjacent to the top of a left reference region and left reference samples adjacent to the left of a left reference region may be used. In this case, reference samples in a 1D array form may be obtained by filling a top reference line adjacent to the top of a left reference region with a left reference sample.

For a top reference region, top reference samples adjacent to the top of a top reference region and left reference samples adjacent to the left of a top reference region may be used. In this case, reference samples in a 1D array form may be obtained by filling a top reference line adjacent to the top of a top reference region with a left reference sample.

Based on a plurality of intra prediction modes, a plurality of intra predictions may be performed on a reference region, and a cost for each of a plurality of intra prediction modes may be calculated. Specifically, after deriving a difference between a reconstructed sample and a prediction sample for each position in a reference region, a difference or a sum of absolute values of a difference for all positions in a reference region may be set as a cost of an intra prediction mode.

An intra prediction mode with the lowest cost among a plurality of intra prediction modes may be selected as an intra prediction mode of a current block.

Alternatively, N intra prediction modes may be selected in ascending order of costs among a plurality of intra prediction modes. Here, N may be a natural number greater than 1. When a plurality of intra prediction modes are selected, intra prediction may be performed on a current block multiple times based on a plurality of selected intra prediction modes. Accordingly, when N prediction blocks are obtained, a final prediction block of a current block may be obtained through an average operation or a weighted sum operation of N prediction blocks.

When a weighted sum operation is used, a weight for each prediction block may be determined based on a cost of an intra prediction mode used to obtain a corresponding prediction block. As an example, the largest weight may be allocated to a prediction block obtained based on an intra prediction mode with the lowest cost, and the smallest weight may be allocated to a prediction block obtained based on an intra prediction mode with the highest cost.

The number of a plurality of intra prediction modes selected for a current block may be predefined in an encoder and a decoder. Alternatively, after comparing a cost of each intra prediction mode with a threshold value, intra prediction modes with a cost smaller than a threshold value may be selected for a current block.

An optimal intra prediction mode may be determined for each of a top reference region and a left reference region. Specifically, a cost for each of a plurality of intra prediction modes may be calculated by performing intra prediction on a top reference region multiple times based on a plurality of intra prediction modes. Then, an intra prediction mode with the lowest cost may be determined as an intra prediction mode of a top reference region.

Likewise, intra prediction may be performed multiple times on a left reference region based on a plurality of intra prediction modes to calculate a cost for each of a plurality of intra prediction modes. Then, an intra prediction mode with the lowest cost may be determined as an intra prediction mode of a left reference region.

If an intra prediction mode of a top reference region is the same as an intra prediction mode of a left reference region, an intra prediction mode of a current block may be also set to be the same as an intra prediction mode of a top reference region and a left reference region.

If an intra prediction mode of a top reference region is different from an intra prediction mode of a left reference region, the one with the lower cost of two intra prediction modes may be set as an intra prediction mode of a current block.

Alternatively, if an intra prediction mode of a top reference region is different from an intra prediction mode of a left reference region, intra prediction for a current block may be performed based on an intra prediction mode of a top reference region and an intra prediction mode of a left reference region, respectively. As a result, when two prediction blocks are obtained, a final prediction block of a current block may be obtained based on an average operation or a weighted sum operation for two prediction blocks.

A prediction block of a current block may be obtained by further considering at least one default mode along with at least one intra prediction mode selected from a neighboring reference region. As an example, intra prediction may be performed based on each of an intra prediction mode and a default mode selected from a reference region to obtain a plurality of prediction blocks for a current block. Afterwards, a final prediction block of a current block may be obtained through an average operation or a weighted sum operation of a plurality of prediction blocks.

M, the number of default modes, may be 0 or an integer equal to or greater than 1. When N intra prediction modes are selected from a reference region, (N+M) prediction blocks may be obtained by performing intra prediction based on each of N intra prediction modes and M default modes. Afterwards, a final prediction block of a current block may be obtained through an average operation or a weighted sum operation of (N+M) prediction blocks.

M, the number of default modes, may be predefined in an encoder and a decoder. Alternatively, based on at least one of a size/a shape of a current block, whether ISP is applied to a current block or whether at least one intra prediction mode selected from a histogram includes a default mode, M, the number of default modes, may be adaptively determined.

A default mode may include at least one of a planar mode, a DC mode or a predefined directional mode.

An encoder and a decoder may be set to use a predefined mode among modes listed above (e.g., a planar mode) as a default mode.

In the above-described embodiments, it was illustrated that intra prediction on a reference region is performed by using a reference line adjacent to a reference region. Unlike an example shown, intra prediction on a reference region may be performed by using a reference line that is not adjacent to a reference region. As an example, for one intra prediction mode, a cost for each of a plurality of reference lines may be calculated. In other words, a plurality of costs may be calculated for one intra prediction mode. In this case, the lowest cost among a plurality of costs may be set as a cost of a corresponding intra prediction mode.

For simplicity, one of a plurality of reference line candidates may be selected, and a cost for each of a plurality of intra prediction modes may be calculated by using a selected reference line.

All intra prediction modes may be applied to a reference region, and accordingly, a cost for all intra prediction modes may be calculated. As an example, all intra prediction modes shown in FIG. 4 may be applied to a reference region.

For simplicity, only some intra prediction modes may be applied to a reference region. Here, some intra prediction modes may include candidate modes (MPMs) calculated based on a current block. Alternatively, candidate modes derived based on a position and a size of a top reference region may be applied to a top reference region, and candidate modes derived based on a position and a size of a left reference region may be applied to a left reference region.

Based on a cost of intra prediction modes, a candidate list of a current block may be configured. As an example, at least one intra prediction mode may be selected in ascending order of costs, and at least one selected intra prediction mode may be inserted into a candidate list as a candidate mode. In this case, an index allocated to each intra prediction mode in a candidate list may be determined based on a cost. Specifically, a candidate mode index allocated to an intra prediction mode with a low cost may have a smaller value than a candidate mode index allocated to an intra prediction mode with a high cost. One of candidate modes included in a candidate list may be set as an intra prediction mode of a current block. Specifically, among candidate modes included in a candidate list, a candidate mode indicated by an index may be set as an intra prediction mode of a current block.

In the above-described embodiments, it was illustrated that a reference region is composed of a top reference region and a left reference region. A reference region may be also configured in a way different from that described.

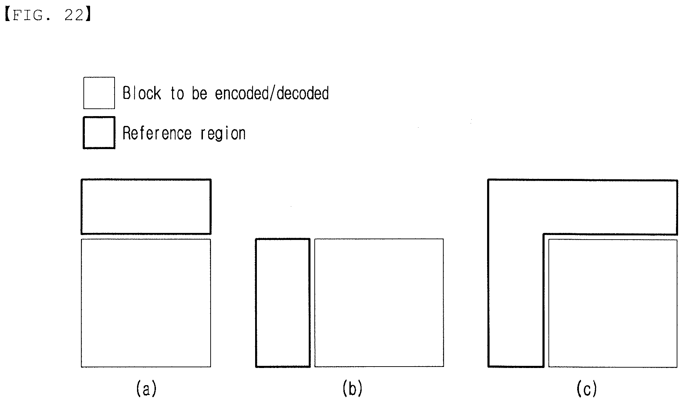

FIG. 22 shows an example related to a configuration of a reference region.

As in an example shown in FIG. 22(a), a reference region may be configured only with a top reference region, or as in an example shown in FIG. 22(b), a reference region may be configured only with a left reference region. Alternatively, as in an example shown in FIG. 22(c), a reference region may be configured so that a top reference region and a left reference region are continuous.

Whether a reference region is configured to include both a top reference region and a left reference region may be determined based on at least one of a size/a shape of a current block, whether ISP is applied to a current block, whether a current block borders a boundary of a CTU or whether a neighboring block is encoded/decoded by intra prediction.

As an example, if a top neighboring block of a current block is not encoded by intra prediction, a top reference region may be excluded when a reference region is configured. Likewise, if a left neighboring block of a current block is not encoded by intra prediction, a left reference region may be excluded when a reference region is configured.

Alternatively, information related to a shape of a reference region may be explicitly encoded and signaled. As an example, after predefining a plurality of candidates in a form of a reference region, an index indicating one of a plurality of candidates may be encoded and signaled.

Partition of a picture may follow a single tree method or a dual tree method. A single tree method means that a partition structure of a luma picture is the same as that of a chroma picture. When a single tree method is applied, a partition shape of a luma block is the same as that of a chroma block. However, according to an image format, a size of a luma block may be different from that of a chroma block.

A dual tree method represents that a partition structure of a luma picture may be different from that of a chroma picture. When a dual tree method is applied, a partition structure of a luma picture and a partition structure of a chroma block may be determined in a mutually independent way.

An intra prediction mode of a chroma block may be determined by referring to an intra prediction mode of a luma block. As an example, when a DM mode is applied, an intra prediction mode of a chroma block may be set to be the same as an intra prediction mode of a co-located luma block. However, when a dual tree method is applied, there may be a case in which a plurality of luma blocks exist at a position corresponding to a chroma block in a luma picture.

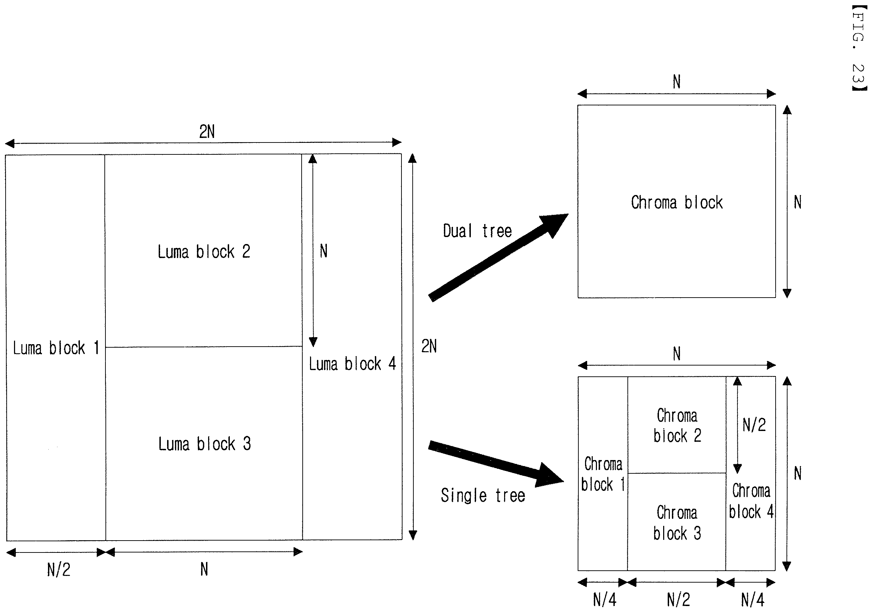

FIG. 23 shows a luma block corresponding to a chroma block per partition structure.

For convenience of a description, it is assumed that an image format is 4:2:0.

In an example shown in FIG. 23, there are four luma blocks in a 2Nx2N size. When a single tree method is followed, a partition structure of a chroma block is the same as that of a luma block. Accordingly, there are four chroma blocks in a NxN size.

Accordingly, when a DM mode is applied in a single tree structure, an intra prediction mode of four chroma blocks (chroma block 1 to 4) included in a NxN size may be set to be the same as an intra prediction mode of luma blocks (luma block 1 to 4).

On the other hand, when a dual tree structure is applied, a partition structure of a chroma block may be different from a partition structure of a luma block. As an example, in FIG. 23, it was shown that a 2Nx2N-sized luma block is partitioned into four luma blocks, but a NxN-sized chroma block corresponding thereto is not partitioned at all. In other words, there are four luma blocks in a 2Nx2N-sized region corresponding to a NxN-sized chroma block. Accordingly, when a DM mode is applied, it must be determined which of four luma blocks will be used to derive an intra prediction mode of a chroma block.

To this end, information identifying a luma block used to derive an intra prediction mode of a chroma block among a plurality of luma blocks may be encoded and signaled. The information may be an index that identifies one of a plurality of luma blocks. In this case, an index allocated to a luma block may be determined based on a partition depth and a partition method.

Alternatively, an intra prediction mode allocated to a sample at a predefined position in a luma region corresponding to a chroma block, specifically, an intra prediction mode of a luma block including a sample at a predefined position, may be applied to a chroma block. Here, a predefined position may be a center position, a top-left position, a top-right position, a bottom-left position or a bottom-right position.

Alternatively, after designating a plurality of position samples as candidate samples, information indicating one of candidate samples may be encoded and signaled. The information may be an index that identifies one of a plurality of candidate samples. Here, candidate samples may include at least one of a center sample, a top-left sample, a top-right sample, a bottom-left sample or a bottom-right sample.

Alternatively, an intra prediction mode of a luma block with a predefined shape or a luma block with the largest size among a plurality of luma blocks may be applied to a chroma block. Here, a predefined shape may be square. Alternatively, a predefined shape may be the same as that of a chroma block.

Meanwhile, when there are a plurality of luma blocks with a predefined shape or a plurality of luma blocks in the same size, an intra prediction mode of a luma block with the smallest index or a luma block at a predefined position may be applied to a chroma block.

Alternatively, an intra prediction mode with the highest frequency among intra prediction modes of a plurality of luma blocks may be applied to a chroma block.

Alternatively, after scanning a plurality of luma blocks in predefined order, an intra prediction mode of the first discovered intra-encoded luma block may be applied to a chroma block.

Alternatively, an intra prediction mode of each of a plurality of luma blocks may be applied to a chroma block. In this case, a plurality of intra prediction modes may be selected for a chroma block. When a plurality of intra prediction modes are selected, intra prediction may be performed on a chroma block multiple times based on each of a plurality of intra prediction modes to obtain a plurality of prediction blocks. Afterwards, a final prediction block for a chroma block may be obtained through an average operation or a weighted sum operation of a plurality of prediction blocks.

As another example, after calculating a cost of each luma block, an intra prediction mode of a luma block with the lowest cost may be applied to a chroma block.

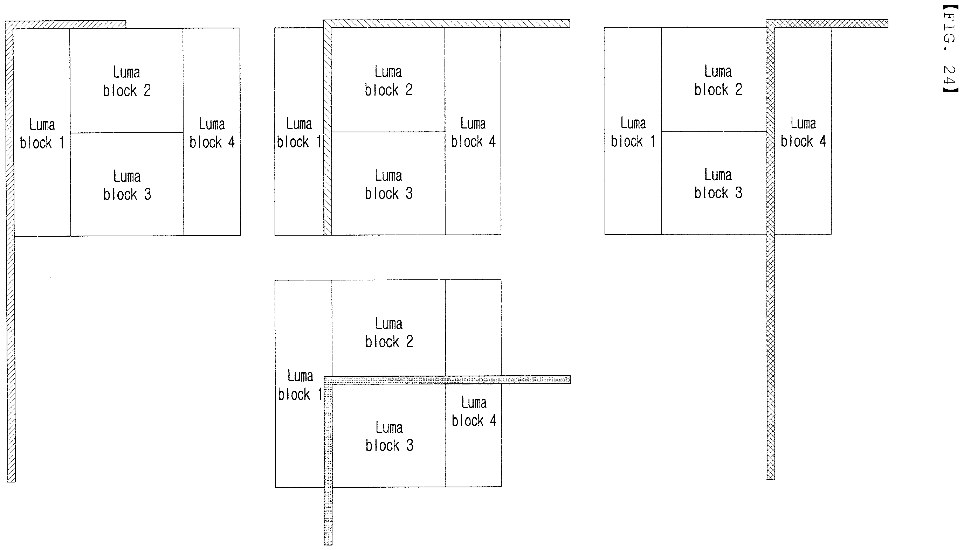

FIG. 24 is a diagram for describing an example of calculating a cost for an intra prediction mode of each luma block.

When it is assumed that all luma blocks are intra-predicted by using an adjacent reference line, reference samples of each luma block may be set as shown in FIG. 24.

Afterwards, for each luma block, intra prediction may be performed based on an intra prediction mode of a luma block. In addition, a sum of differences or a sum of absolute values of differences between a prediction sample and a reconstructed sample for each position in a luma block may be set as a cost of a luma block.

Once a cost of each luma block is calculated, an intra prediction mode of a luma block with the lowest cost may be applied to a chroma block.

Meanwhile, if intra prediction is performed for a luma block to derive an intra prediction mode of a chroma block, intra prediction may be performed once again to calculate an intra prediction mode of a chroma block after intra prediction is performed to encode/decode a luma block. Accordingly, after storing a prediction block calculated in encoding/decoding a luma block, a cost of a luma block may be calculated by using a stored prediction block. In this case, implementation complexity is reduced, but an additional buffer may be needed to store a prediction value of a luma block.

As another example, regardless of a partition structure of a luma block, intra prediction may be performed multiple times on a luma region corresponding to a chroma block to calculate a cost for each of a plurality of intra prediction modes. As an example, when a chroma block has a size of NxN, intra prediction may be performed multiple times on a 2Nx2N-sized luma block corresponding thereto to calculate a cost for each of a plurality of intra prediction modes. In this case, intra prediction may be performed by using an adjacent reference line or a non-adjacent reference line of a luma block.

Once a cost for a plurality of intra prediction modes is calculated, an intra prediction mode with the lowest cost may be applied to a chroma block. Alternatively, a plurality of intra prediction modes may be selected in ascending order of costs among a plurality of intra prediction modes.

In this case, a plurality of intra prediction modes applied to a 2Nx2N-sized luma block may include all intra prediction modes shown in FIG. 4.

Alternatively, a plurality of intra prediction modes applied to a 2Nx2N-sized luma block may include intra prediction modes of a plurality of luma blocks (e.g., luma block 1 to 4) included in a 2Nx2N-sized luma region.

Alternatively, a plurality of intra prediction modes applied to a 2Nx2N-sized luma block may include at least one default mode and intra prediction modes of a plurality of luma blocks (e.g., luma block 1 to 4) included in a 2Nx2N-sized luma region. Here, a default mode may include at least one of a planar mode, a DC mode, a vertical mode or a horizontal mode.

A term of syntaxes used in the above-described embodiments is just named for convenience of a description.

When embodiments described based on a decoding process or an encoding process are applied to an encoding process or a decoding process, it is included in a scope of the present disclosure. When embodiments described in predetermined order are changed in order different from a description, it is also included in a scope of the present disclosure.

The above-described embodiment is described based on a series of steps or flow charts, but it does not limit a time series order of the present disclosure and if necessary, it may be performed at the same time or in different order. In addition, each component (e.g., a unit, a module, etc.) configuring a block diagram in the above-described embodiment may be implemented as a hardware device or software and a plurality of components may be combined and implemented as one hardware device or software. The above-described embodiment may be recorded in a computer readable recoding medium by being implemented in a form of a program instruction which may be performed by a variety of computer components. The computer readable recoding medium may include a program instruction, a data file, a data structure, etc. solely or in combination. A hardware device which is specially configured to store and perform magnetic media such as a hard disk, a floppy disk and a magnetic tape, optical recording media such as CD-ROM, DVD, magneto-optical media such as a floptical disk and a program instruction such as ROM, RAM, a flash memory, etc. is included in a computer readable recoding medium. The hardware device may be configured to operate as one or more software modules in order to perform processing according to the present disclosure and vice versa.

[Industrial Availability]

Embodiments according to the present disclosure may be applied to an electronic device which may encode/-decode an image.

**Claims**

1. A method of decoding an image, the method comprising:

   determining at least one intra prediction mode for a current block; and
   based on the at least one intra prediction mode, performing an intra prediction on the current block,
   wherein the at least one intra prediction mode is determined based on a cost derived by performing the intra prediction on a reference region of the current block based on each of a plurality of intra prediction modes.

2. The method of claim 1, wherein:
   a cost of an intra prediction mode is calculated based on a difference between reconstructed samples of the reference region and prediction samples of the reference region obtained through the intra prediction mode.

3. The method of claim 1, wherein:
   the reference region includes a top reference region at a top position of the current block and a left reference region at a left position of the current block.

4. The method of claim 3, wherein:

   a cost of the plurality of intra prediction modes is obtained independently for each of the top reference region and the left reference region, and
   at least one of a first intra prediction mode having a lowest cost for the top reference region and a second intra prediction mode having a lowest cost for the left reference region is determined as the at least one intra prediction mode of the current block.

5. The method of claim 1, wherein:
   the at least one intra prediction mode is determined in an ascending order of costs of the plurality of intra prediction modes.

6. The method of claim 1, wherein when the plurality of intra prediction modes are selected for the current block, the intra prediction is performed on the current block based on the each of the plurality of intra prediction modes to obtain a plurality of prediction blocks, and
   wherein a final prediction block of the current block is obtained through an average operation or a weighted sum operation of the plurality of prediction blocks.

7. The method of claim 1, wherein:
   the plurality of intra prediction modes include candidate modes derived with reference to the current block.

8. The method of claim 1, wherein:

   the at least one intra prediction mode of the current block is selected from a plurality of candidate modes included in a candidate list, and
   at least one of the candidate modes is selected in an ascending order of costs of the plurality of intra prediction modes.

9. A method of encoding an image, the method comprising:

   determining at least one intra prediction mode for a current block; and
   based on the at least one intra prediction mode, performing an intra prediction on the current block,
   wherein the at least one intra prediction mode is determined based on a cost derived by performing the intra prediction on a reference region of the current block based on each of a plurality of intra prediction modes.

**10.** The method of claim 9, wherein:
a cost of an intra prediction mode is calculated based on a difference between reconstructed samples of the reference region and prediction samples of the reference region obtained through the intra prediction mode.

**11.** The method of claim 9, wherein:
the reference region includes a top reference region at a top position of the current block and a left reference region at a left position of the current block.

**12.** The method of claim 11, wherein:

a cost of the plurality of intra prediction modes is obtained independently for each of the top reference region and the left reference region, and
at least one of a first intra prediction mode having a lowest cost for the top reference region and a second intra prediction mode having a lowest cost for the left reference region is determined as the at least one intra prediction mode of the current block.

**13.** The method of claim 9, wherein:
the at least one intra prediction mode is determined in an ascending order of costs of the plurality of intra prediction modes.

**14.** The method of claim 9, wherein when the plurality of intra prediction modes are selected for the current block

the intra prediction is performed on the current block based on the each of the plurality of intra prediction modes to obtain a plurality of prediction blocks, and
wherein a final prediction block of the current block is obtained through an average operation or a weighted sum operation of the plurality of prediction blocks.

**15.** A computer-readable recording medium that stores a bitstream generated by an image encoding method, the encoding method comprising:

determining at least one intra prediction mode for a current block; and
based on the at least one intra prediction mode, performing an intra prediction on the current block,
wherein the at least one intra prediction mode is determined based on a cost derived by performing the intra prediction on a reference region of the current block based on each of a plurality of intra prediction modes.

【FIG. 1】

100

Current picture → | Picture partitioning module | 110

Prediction target block

Residual block

Transform module | 130

Quantization module | 135

Rearrangement module | 160

Entropy encoding module | 165 → NAL

Inter prediction module | 120

Intra prediction module | 125

Inverse quantization module | 140

Inverse transform module | 145

Reconstructed residual block

Filter module | 150

Memory | 155

【FIG. 2】

【FIG. 3】

Determine reference line of current block ⟿ S300

Determine intra prediction mode of current block ⟿ S310

Perform intra prediction for current block ⟿ S320

【FIG. 4】

0: Planar mode
1 : DC mode

【FIG. 5】

0:Planar mode
1:DC mode

【FIG. 6】

REFERENCE SAMPLE

PREDICTION SAMPLE

【FIG. 7】

REFERENCE SAMPLE

【FIG. 8】

⬚ PREDICTION SAMPLE

⬚ INTEGER POSITION REFERENCE SAMPLE

⬚ FRACTIONAL POSITION REFERENCE SAMPLE

【FIG. 9】

(a)                                                              (b)

【FIG. 10】

| Intra prediction mode | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|---|
| tanθ × 32 | X | X | 32 | 29 | 26 | 23 | 20 | 18 | 16 | 14 | 12 | 10 | 8 | 6 | 4 | 3 | 2 | 1 | 0 | -1 | -2 | -3 | -4 |

| Intra prediction mode | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 |
|---|---|---|---|---|---|---|---|---|---|---|---|---|---|---|---|---|---|---|---|---|---|---|---|
| tanθ × 32 | -6 | -8 | -10 | -12 | -14 | -16 | -18 | -20 | -23 | -26 | -29 | -32 | -29 | -26 | -23 | -20 | -18 | -16 | -14 | -12 | -10 | -8 | -6 |

| Intra prediction mode | 46 | 47 | 48 | 49 | 50 | 51 | 52 | 53 | 54 | 55 | 56 | 57 | 58 | 59 | 60 | 61 | 62 | 63 | 64 | 65 | 66 |
|---|---|---|---|---|---|---|---|---|---|---|---|---|---|---|---|---|---|---|---|---|---|---|
| tanθ × 32 | -4 | -3 | -2 | -1 | 0 | 1 | 2 | 3 | 4 | 6 | 8 | 10 | 12 | 14 | 16 | 18 | 20 | 23 | 26 | 29 | 32 |

【FIG. 11】

| Intra prediction mode | -14 | -13 | -12 | -11 | -10 | -9 | -8 | -7 | -6 | -5 | -4 | -3 | -2 | -1 |
|---|---|---|---|---|---|---|---|---|---|---|---|---|---|---|
| tan θ × 32 | 512 | 341 | 256 | 171 | 128 | 102 | 86 | 73 | 64 | 57 | 51 | 45 | 39 | 35 |
| Intra prediction mode | 67 | 68 | 69 | 70 | 71 | 72 | 73 | 74 | 75 | 76 | 77 | 78 | 79 | 80 |
| tan θ × 32 | 35 | 39 | 45 | 51 | 57 | 64 | 73 | 86 | 102 | 128 | 171 | 256 | 341 | 512 |

【FIG. 12】

 Reference sample
 Prediction sample
 Reference sample generated through interpolation
⟶ Projection for interpolation
⟹ Prediction direction in directional mode

【FIG. 13】

【FIG. 14】

● Reference sample

◎ Prediction sample

◎ Reference sample generated through interpolation

→ Prediction direction in directional mode

【FIG. 15】

Reference sample for reference region
Reference sample
Reference region
Block to be encoded/decoded

【FIG. 16】

Block to be encoded/decoded

Reference sample for reference region

Reference sample

Reference region

Reference sample for planar prediction of top reference region

Reference sample for planar prediction of left reference region

【FIG. 17】

Block to be encoded/decoded

⊛ Reference sample for reference region

⊘ Reference sample

☐ Reference region

⌐‾⌐ Reference sample for
∟_⌐ DC prediction of top reference region

⸬⸬⸬ Reference sample for
⸬⸬⸬ DC prediction of left reference region

【FIG. 18】

【FIG. 19】

Block to be encoded/decoded

⬤ Reference sample for reference region

◯ Reference sample

▭ Reference region

⌐¬
⌊_⌋ Reference sample for planar prediction of top reference region

⁝⁝⁝ Reference sample for planar prediction of left reference region

【FIG. 20】

Block to be encoded/decoded

Reference sample for reference region

Reference sample

Reference region

Reference sample for
DC prediction of top reference region

Reference sample for
DC prediction of left reference region

[FIG. 21]

EP 4 496 308 A1

Top reference sample line for top specific region :

Top reference sample line
for left specific region

⊕ Reference sample for reference region

⊘ Reference sample generated
through interpolation

◌ Reference sample

☐ Reference region

◌ Block to be encoded/decoded

【FIG. 22】

Block to be encoded/decoded

Reference region

(a)  (b)  (c)

【FIG. 23】

【FIG. 24】

<div align="center">**INTERNATIONAL SEARCH REPORT**</div>

| | |
|---|---|
| International application No. | |
| | **PCT/KR2023/003439** |

**A. CLASSIFICATION OF SUBJECT MATTER**

**H04N 19/11**(2014.01)i; **H04N 19/593**(2014.01)i; **H04N 19/176**(2014.01)i; **H04N 19/132**(2014.01)i; **H04N 19/105**(2014.01)i

According to International Patent Classification (IPC) or to both national classification and IPC

**B. FIELDS SEARCHED**

Minimum documentation searched (classification system followed by classification symbols)

H04N 19/11(2014.01); H04N 19/105(2014.01); H04N 19/107(2014.01); H04N 19/159(2014.01); H04N 19/533(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 현재 블록(current block), 인트라(intra), 예측(prediction), 모드(mode), 참조 (reference), 비용(cost), 샘플(sample)

**C. DOCUMENTS CONSIDERED TO BE RELEVANT**

| Category* | Citation of document, with indication, where appropriate, of the relevant passages | Relevant to claim No. |
|---|---|---|
| X | US 2021-0266534 A1 (TENCENT TECHNOLOGY (SHENZHEN) COMPANY LIMITED) 26 August 2021 (2021-08-26)<br>See claims 1-3. | 1,3-5,7-9,11-13,15 |
| Y | | 2,6,10,14 |
| Y | KR 10-2020-0002037 A (TENCENT TECHNOLOGY(SHENZHEN) COMPANY LIMITED) 07 January 2020 (2020-01-07)<br>See claim 9. | 2,10 |
| Y | KR 10-2021-0082406 A (ELECTRONICS AND TELECOMMUNICATIONS RESEARCH INSTITUTE et al.) 05 July 2021 (2021-07-05)<br>See claims 5-7. | 6,14 |
| A | US 2021-0084294 A1 (INTEL CORPORATION) 18 March 2021 (2021-03-18)<br>See paragraphs [0020]-[0043]; claims 1-7; and figure 1. | 1-15 |

☑ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**19 June 2023** | Date of mailing of the international search report<br><br>**20 June 2023** |
| Name and mailing address of the ISA/KR<br><br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/003439** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021-040330 A1 (SAMSUNG ELECTRONICS CO., LTD.) 04 March 2021 (2021-03-04)<br>See paragraph [0007]; and claims 1-8. | 1-15 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| US | 2021-0266534 | A1 | 26 August 2021 | CN | 109889827 | A | 14 June 2019 |
| | | | | CN | 109889827 | B | 29 January 2021 |
| | | | | JP | 2022-527685 | A | 03 June 2022 |
| | | | | JP | 7250927 | B2 | 03 April 2023 |
| | | | | US | 11451772 | B2 | 20 September 2022 |
| | | | | WO | 2020-207162 | A1 | 15 October 2020 |
| KR | 10-2020-0002037 | A | 07 January 2020 | CN | 109587491 | A | 05 April 2019 |
| | | | | CN | 109587491 | B | 23 September 2022 |
| | | | | EP | 3691263 | A1 | 05 August 2020 |
| | | | | JP | 2020-519186 | A | 25 June 2020 |
| | | | | JP | 6943482 | B2 | 29 September 2021 |
| | | | | US | 11363276 | B2 | 14 June 2022 |
| | | | | US | 2020-0036984 | A1 | 30 January 2020 |
| | | | | WO | 2019-062475 | A1 | 04 April 2019 |
| KR | 10-2021-0082406 | A | 05 July 2021 | CN | 103548356 | A | 29 January 2014 |
| | | | | CN | 107623857 | A | 23 January 2018 |
| | | | | KR | 10-1857755 | B1 | 15 May 2018 |
| | | | | KR | 10-2019-0016059 | A | 15 February 2019 |
| | | | | KR | 10-2020-0101900 | A | 28 August 2020 |
| | | | | KR | 10-2022-0054562 | A | 03 May 2022 |
| | | | | KR | 10-2023-0043079 | A | 30 March 2023 |
| | | | | KR | 10-2148466 | B1 | 26 August 2020 |
| | | | | KR | 10-2271143 | B1 | 30 June 2021 |
| | | | | US | 10142623 | B2 | 27 November 2018 |
| | | | | US | 11523133 | B2 | 06 December 2022 |
| | | | | US | 2014-0003518 | A1 | 02 January 2014 |
| | | | | US | 2019-0037239 | A1 | 31 January 2019 |
| | | | | US | 2020-0154136 | A1 | 14 May 2020 |
| | | | | US | 2023-0133166 | A1 | 04 May 2023 |
| | | | | US | 2023-0156220 | A1 | 18 May 2023 |
| | | | | WO | 2012-141500 | A2 | 18 October 2012 |
| US | 2021-0084294 | A1 | 18 March 2021 | CN | 112087628 | A | 15 December 2020 |
| | | | | DE | 102020108428 | A1 | 17 December 2020 |
| | | | | US | 10855983 | B2 | 01 December 2020 |
| | | | | US | 11323700 | B2 | 03 May 2022 |
| | | | | US | 2019-0297344 | A1 | 26 September 2019 |
| WO | 2021-040330 | A1 | 04 March 2021 | CN | 112437298 | A | 02 March 2021 |

Form PCT/ISA/210 (patent family annex) (July 2022)